(19)

Europäisches Patentamt
European Patent Office
Office européen des brevets

(11)  **EP 3 798 914 B1**

(12)  **EUROPEAN PATENT SPECIFICATION**

(45) Date of publication and mention
of the grant of the patent:
**02.08.2023  Bulletin 2023/31**

(21) Application number: **19199322.9**

(22) Date of filing: **24.09.2019**

(51) International Patent Classification (IPC):
**G06N 3/049** *(2023.01)*          **G06N 3/084** *(2023.01)*
**G06N 3/065** *(2023.01)*

(52) Cooperative Patent Classification (CPC):
**G06N 3/084; G06N 3/049; G06N 3/065**

(54) **ARTIFICIAL SYNAPSE**

**KÜNSTLICHE SYNAPSE**

**SYNAPSE ARTIFICIEL**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.03.2021  Bulletin 2021/13**

(73) Proprietors:
• **Hitachi, Ltd.**
**Tokyo 100-8280 (JP)**
• **Cambridge Enterprise, Ltd.**
**Cambridge Cambridgeshire CB2 1TN (GB)**

(72) Inventors:
• **Wunderlich, Joerg**
**Cambridge Cambridgeshire CB3 0HE (GB)**
• **Armitage, John**
**Ottawa, Ontario K1P 5V5 (CA)**

• **Venkateshvaran, Deepak**
**Cambridge Cambridgeshire CB2 1TN (GB)**

(74) Representative: **Piotrowicz, Pawel Jan Andrzej
Venner Shipley LLP
Byron House
Cambridge Business Park
Cowley Road
Cambridge CB4 0WZ (GB)**

(56) References cited:
**US-A- 5 530 275      US-B1- 8 977 578**

• **T Jungwirth ET AL: "FOCUS | COMMENT", , 2
March 2018 (2018-03-02), XP055681447,
Retrieved from the Internet:
URL:https://www.nature.com/articles/s41567
-018-0063-6.pdf [retrieved on 2020-03-31]**

EP 3 798 914 B1

**Description**

**Field of the Invention**

The present invention relates to an antiferromagnetic-based artificial synapse for use in an artificial neural network.

**Background**

Artificial neural networks mimic the structure and functionality of biological brains and offer a promising route to general artificial intelligence. Reference is made to Hassabis, D., Kumaran, D., Summerfield, C. & Botvinick, M.: "Neuroscience-Inspired Artificial Intelligence", Neuron, volume 95, pages 245-258 (2017).

One type of artificial neural network comprises memristor-based neuromorphic units, for example, as described in Schuman, C. D. et al.: "Survey of Neuromorphic Computing and Neural Networks in Hardware" arXiv:1705.06963 (2017). Memristor-based neuromorphic units can take the form of processing units specifically designed to simulate neurons. Each memristor functions as an artificial synapse between two artificial neurons by controlling electrical conductance (or "weight") between neurons. The weight is stored as a state of a memory element of a memristor.

Memristor-based neuromorphic units can suffer one or more drawbacks.

Memristors tend to be difficult to fabricate and are usually not particularly durable. The memory elements are sensitive to stray electronic and magnetic fields, and thermal fluctuations. Memory states are usually difficult to reproduce. The memory elements also suffer from slow state switching rates. Furthermore, memristors have a limited dynamic range of synapse conductivity. Moreover, memristor-based neuromorphic units may only support single layer unsupervised learning. Therefore, memristor-based neuromorphic units may not be able to implement some forms of artificial intelligence algorithms.

US 8 977 578 B1 discloses a synaptic time-multiplexed (STM) neuromorphic network including a neural fabric that includes nodes and switches to define inter-nodal connections between selected nodes of the neural fabric. The STM neuromorphic network further includes a neuromorphic controller to form subsets of a set of the inter-nodal connections representing a fully connected neural network. Each subset is formed during a different time slot of a plurality of time slots of a time multiplexing cycle of the STM neuromorphic network. In combination, the inter-nodal connection subsets implement the fully connected neural network. A method of synaptic time multiplexing a neuromorphic network includes providing the neural fabric and forming the subsets of the set of inter-nodal connections.

**Summary**

According to a first aspect of the present invention there is provided an artificial synapse comprising an antiferromagnetic counter element. The antiferromagnetic counter element comprises a cruciform antiferromagnet having first, second, third and fourth arms having first, second, third and fourth terminals respectively, wherein the first and second arms provide a first pair of opposite arms and the third and fourth arms provide a second, different pair of opposite arms. The antiferromagnetic counter element also comprises a read/write control circuit configured to operate in a read mode and a write mode, wherein the read/write control circuit comprises a plurality of switching elements arranged to select between different conduction paths through the antiferromagnet in response to a set of control signals so as to switch between the read and write modes. In the write mode, the switching elements are arranged to switch the antiferromagnet between an accumulation state having a first set of conduction paths and a depletion state having a second set of conduction paths, and in a read mode, the switching elements are arranged to select a read conduction path to allow measurement of a readout signal between an opposite pair of terminals. The antiferromagnetic counter element also comprises a readout circuit configured to provide a readout signal indicating a transverse voltage to a readout terminal, wherein the readout circuit comprises a voltage measuring unit, wherein the voltage measuring unit is connected across the opposite pair of terminals and connected to the readout terminal. The voltage measuring unit is configured to measure the transverse voltage and to provide the readout signal to the readout terminal, the transverse voltage having a direction transverse to a direction of the read conduction path. The artificial synapse also comprises a coupling circuit comprising at least one control switch and at least one weighted switch, wherein the at least one control switch is controllable by a coupling control signal to selectively couple (for example, directly connect) and decouple (for example, directly disconnect) the at least one weighted switch to the readout terminal, and wherein the at least one weighted switch is arranged to receive the readout signal at a terminal of the at least one weighted switch, the impedance of the at least one weighted switch being determined by the transverse voltage.

The artificial synapse may have improved endurance, fabrication reproducibility, stray magnetic field sensitivity, state switching rates and dynamic range of synapse conductivity compared to known neuromorphic units, for example, memristor-based neuromorphic units.

The artificial synapse may also provide deterministic and reliable state switching, meaning the artificial synapse is suitable for implementing artificial neural network algorithms such as spiked-time dependent plasticity (STDP) and spiking rate neural network (SRN).

The cruciform antiferromagnet may be an antiferromagnetic system showing locally broken inversion symmetry.

The cruciform antiferromagnet may be an antiferromagnet with a crystal structure showing locally broken inversion symmetry and where antiferromagnetic sublattices form inversion partners.

The cruciform antiferromagnet may comprise CuMnAs or $Mn_2Au$.

The switching elements may be field-effect transistors.

A write signal provided along the first or second conduction paths may have current pulse length of between 1 ps to 1 $\mu$s.

According to a second aspect of the present invention there is provided an artificial synapse comprising at least one tunnel junction counter element comprising a cruciform antiferromagnet having first, second, third and fourth arms having first, second, third and fourth terminals respectively, wherein the first and second arms provide a first pair of opposite arms and the third and fourth arms provide a second, different pair of opposite arms, an electrode and a dielectric layer interposed between the cruciform antiferromagnet and the electrode to form a tunnel junction, the electrode providing a tunnel junction terminal. The at least one tunnel junction counter element also comprises a read/write control circuit configured to operate in a read mode and a write mode, wherein the read/write control circuit comprises a plurality of switching elements arranged to select between different conduction paths through the cruciform antiferromagnet in response to a set of control signals. In the write mode, the switching elements are arranged to switch the cruciform antiferromagnet between an accumulation state having a first set of conduction paths and a depletion state having a second set of conduction paths, and in a read mode, the switching elements are arranged to select a read conduction path to allow output of an output signal, wherein the output signal is output upon the tunnel junction terminal receiving a tunnel junction terminal signal. The at least one tunnel junction counter element also comprises an output terminal coupled (for example, directly connected) to at least one of the first, second, third, or fourth terminals for providing the output signal, wherein the output signal indicates the weight of the synapse.

The artificial synapse may comprise the antiferromagnetic counter element comprising a readout circuit configured to provide a readout signal indicating a voltage to a readout terminal, wherein the readout circuit comprises a voltage measuring unit, wherein the voltage measuring unit is connected across the output terminal and a tunnel junction readout terminal, the tunnel junction readout terminal being coupled (for example, directly connected) to the tunnel junction terminal. The voltage measuring unit is configured to measure the voltage and to provide the readout signal to the readout terminal. The artificial synapse may also comprise a coupling circuit comprising a plurality of control switches and a plurality of weighted switches, wherein the plurality of control switches is controllable by a coupling control signal to selectively couple (for example, directly connect) and decouple (for example, directly disconnect) the plurality of weighted switches to the readout terminal, and wherein the plurality of weighted switches is arranged to receive the readout signal at a terminal of each weighted switch, the impedance of the each weighted switch being determined by the voltage.

The artificial synapse may comprising first and second tunnel junction counter elements controllable by the set of control signals and jointly coupled (for example, directly connected) to the output terminal, wherein the output terminal is jointly coupled (for example, directly connected) to the second terminal of each tunnel junction counter element, the first tunnel junction counter element comprises a first tunnel junction terminal for receiving a first tunnel junction terminal signal, and the second tunnel junction counter element comprises a second tunnel junction terminal for receiving a second tunnel junction terminal signal, wherein the first and second tunnel junction terminal signals are of equal magnitude and opposite polarity.

The artificial synapse may comprise a readout circuit configured to provide a readout signal indicating a voltage to a readout terminal, wherein the readout circuit comprises a voltage measuring unit, wherein the voltage measuring unit is connected across the output terminal and a terminal which is grounded, and the voltage measuring unit is configured to measure the voltage and to provide the readout signal to the readout terminal.

The artificial synapse may comprise a coupling circuit comprising a weighted switch with first, second, and third terminals, wherein the first terminal of the weighted switch is coupled (for example, directly connected) to the second tunnel junction terminal, and the third terminal of the weighted switch is coupled (for example, directly connected) to the readout terminal and is configured to control a conduction path between the first and second terminals of the weighted switch.

The artificial synapse may comprise a coupling circuit comprising at least one control switch and at least one weighted switch, wherein the at least one control switch is controllable by a coupling control signal to selectively couple (for example, directly connect) and decouple (for example, directly disconnect) the at least one weighted switch to the readout terminal, and wherein the at least one weighted switch is arranged to receive the readout signal at a terminal of the at least one weighted switch, the impedance of the at least one weighted switch being determined by the voltage.

The cruciform antiferromagnet may be an antiferromagnetic system showing locally broken inversion symmetry.

The cruciform antiferromagnet may be an antiferromagnet with a crystal structure showing locally broken inversion symmetry and where antiferromagnetic sublattices form inversion partners.

The cruciform antiferromagnet may comprise CuMnAs or $Mn_2Au$.

The switching elements may be field-effect transistors.

An artificial neural network may comprise an array of the artificial synapses.

**Brief Description of the Drawings**

Certain embodiments of the present invention will now be described, by way of example, with reference to the accompanying drawings in which:

Figure 1 is schematically illustrates a first artificial synapse;

Figure 2 is schematic block diagram of an artificial neural network which includes a network of artificial synapses;

Figure 3 schematically illustrates an antiferromagnetic counter element;

Figure 4a schematically illustrates an antiferromagnet and a circuit for reading out a state of the antiferromagnet;

Figures 4b and 4c schematically illustrate the antiferromagnet in positive and negative states respectively;

Figure 5 is a graph of readout signal strength of a memory element against pulse number;

Figures 6a and 6b are graphs of impendence against pulse number for first and second pulse lengths respectively;

Figure 7 schematically illustrates a second artificial synapse for use in a Spiked-Time Dependent Plasticity artificial neural network;

Figures 8a and 8b are graphs of respective first and second learning curves achieved by the artificial synapse shown in Figure 7;

Figure 9 shows a plurality of $3\times3$ pixel binary images for use as data input in an artificial neural network;

Figure 10 shows a graph of recognition rate against training epoch using the artificial synapse shown in Figure 7;

Figure 11 schematically illustrates a third artificial synapse for use in a spiking rate neural network;

Figure 12a shows a graph of recognition rate against training epoch for the artificial synapse shown in Figure 11;

Figure 12b shows a graph of square root error against training epoch for the artificial synapse shown in Figure 11;

Figure 13a shows an antiferromagnet and a tunnel junction with voltage signal readout circuitry;

Figure 13b shows a tunnel junction counter element;

Figure 14 schematically illustrates a fourth artificial synapse;

Figure 15 schematically illustrates a double tunnel junction counter element arrangement;

Figure 16 schematically illustrates a fifth artificial synapse;

Figure 17 schematically illustrates a sixth artificial synapse;

Figure 18 schematically illustrates an seventh artificial synapse for use in a spiking rate neural network; and

Figure 19 schematically illustrates a eighth artificial synapse for use in a spiking rate neural network.

**Detailed Description**

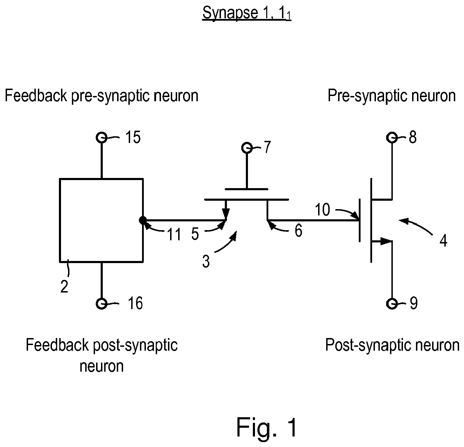

Referring to Figure 1, a first artificial synapse 1, $1_1$ is shown.

The artificial synapse $1_1$ includes an antiferromagnetic counter element 2, a control switch 3 and a weighted switch 4.

The control switch 3 has a conduction path between first and second terminals 5, 6 whose conductivity is controlled by a third terminal 7. Similarly, the weighted switch 4 has a conduction path between first and second terminals 8, 9 whose conductivity is controlled by a third terminal 10.

The antiferromagnetic counter element 2 includes a readout terminal 11 which is connected to the first terminal 5 of the control switch 3. The second terminal 6 of the control switch 3 is connected to the third terminal 10 of the weighted switch 4. A coupling control signal can be applied to the third terminal 7 of the control switch 3 and can be used to selectively connect and disconnect the readout terminal 11 of the antiferromagnetic counter element 2 and the third terminal 10 of the weighted switch 4.

The control switch 3 may take the form of a field-effect transistor. The weighted switch 4 may take the form of a field-effect transistor, or another voltage-controlled switch such as a voltage controlled polarizer.

The artificial synapse 1 may be used as a variable resistor.

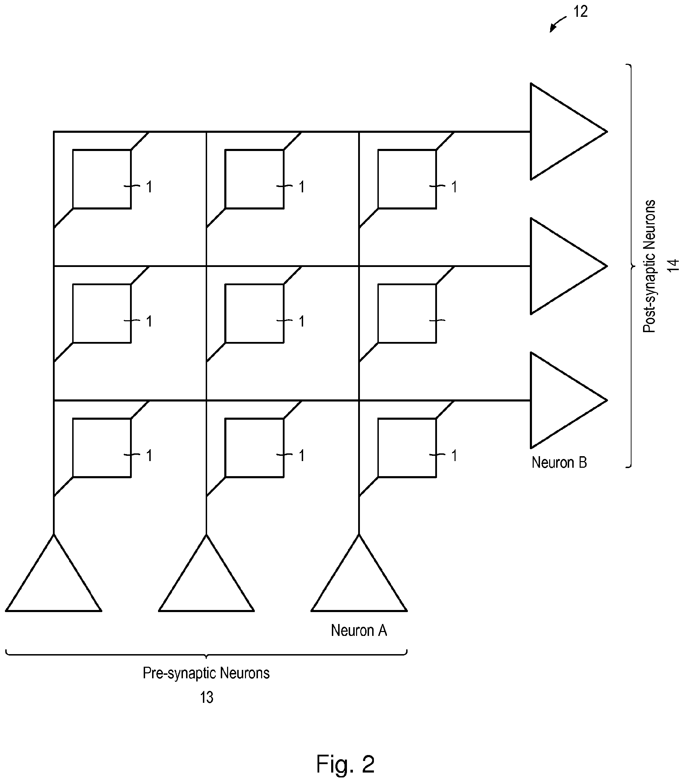

Referring to Figure 2, the artificial synapse 1 may serve as a basic unit used to construct an artificial neural network 12.

The artificial neural network 12 includes a set of pre-synaptic neurons 13, and a set of post-synaptic neurons 14 and a network of artificial synapses 1. Each pre-synaptic neuron 13 is connected to each post-synaptic neuron 14 via a network of artificial synapses 1. The network of artificial synapses 1 may take the form of an array whereby each array element comprises a respective artificial synapse 1.

The artificial neural network 12 may be a multi-layer neural network, as will be described in more detail hereinafter. Figure 2 shows a single-layered neural network.

Referring to Figure 1 and 2, the way in which the first artificial synapse 1, $1_1$ is incorporated into the artificial neural network 12 will now be described.

The first terminal 8 of the weighted switch 4 is connected to at least one pre-synaptic neuron, for example neuron A. The second terminal 9 of the weighted switch 4 is connected to at least one post-synaptic neuron 14, for example neuron B. The position of the first artificial synapse $1_1$ in the artificial neural network 12 dictates which neurons 13, 14 are connected to the first artificial synapse $1_1$.

The antiferromagnetic counter element 2 includes at least one terminal ("pre-synaptic feedback terminal") 15 for receiving a pre-synaptic feedback signal from the pre-synaptic neuron 13, and a terminal ("post-synaptic feedback terminal") 16 for receiving a post-synaptic feedback signal from the post-synaptic neuron 14.

Signals travelling through the artificial neural network 12 are feedforward propagated or back-propagated, depending on the type of algorithm being implemented by the artificial neural network 12. Thus, the first terminal 8 may be for receiving a pre-synaptic neuron signal from the pre-synaptic neuron 13, or may be for outputting the pre-synaptic neuron signal to the pre-synaptic neuron 13. The second terminal 9 may be for outputting a post-synaptic neuron signal to the post-synaptic neuron 14, or may be for receiving the post-synaptic neuron signal from the post-synaptic neuron 14. In other words, neuron B for example may be used as either an input neuron or an output neuron.

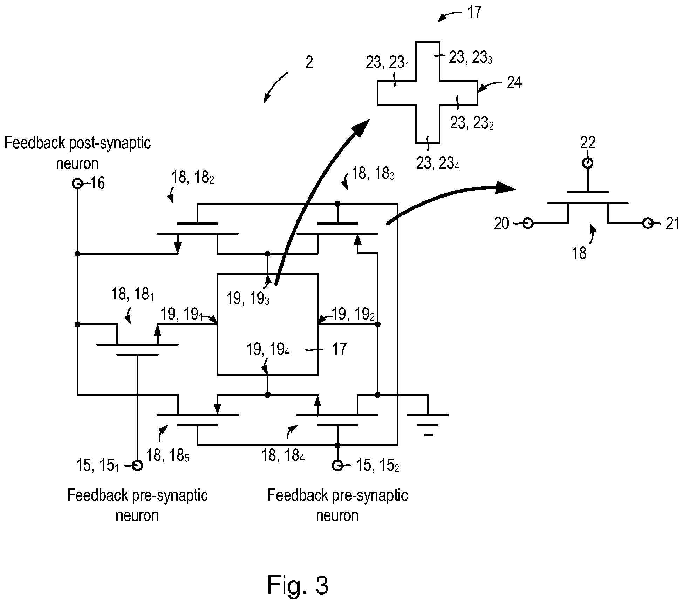

Referring to Figure 3, the antiferromagnetic counter element 2 will now be described in more detail.

The antiferromagnetic counter element 2 includes an antiferromagnet 17, an arrangement of switching elements 18 connected to the antiferromagnet 17 via first, second, third, and fourth antiferromagnet terminals 19, $19_1$, $19_2$, $19_3$, $19_4$. The arrangement of switching elements 18 includes first, second, third, fourth and fifth switching elements 18, $18_1$, $18_2$, $18_3$, $18_4$, $18_5$. Each switching element 18 has a conduction path between first and second terminals 20, 21 whose conductivity is controlled by a third terminal 22. The second antiferromagnet terminal $19_2$ is connected to a ground.

The antiferromagnet 17 has a cruciform shape with first, second, third, and fourth arms 23, $23_1$, $23_2$, $23_3$, $23_4$. The first arm $23_1$ is opposite the second arm $23_2$ and the third arm $23_3$ is opposite the fourth arm $23_4$. Each first, second, third and fourth antiferromagnet terminal 19, $19_1$, $19_2$, $19_3$, $19_4$ is provided on each first, second, third, and fourth arm 23, $23_1$, $23_2$, $23_3$, $23_4$ respectively. So for example, the first antiferromagnet terminal $19_1$ is provided on the first arm 23, $23_1$, and the second antiferromagnet terminal $19_2$ is provided on the second arm 23, $23_2$. Each antiferromagnet terminal 19 may be provided at an end 24 of each arm 23.

The second terminal 21 of the first switching element $18_1$ is connected to the first antiferromagnet terminal 19, $19_1$.

The second, third, fourth and fifth switching elements 18, $18_2$, $18_3$, $18_4$, $18_5$ are connected in series via their first and second terminals 20, 21. The second, third and fourth antiferromagnet terminals $19_2$, $19_3$, $19_4$ are connected between these switching elements 18. Specifically, the third antiferromagnet terminal $19_3$ is jointly connected to the second terminal 21 of the second switching element $18_2$ and the first terminal 20 of the third switching terminal $18_3$. The second antiferromagnet terminal $19_2$ is jointly connected to the second terminal 21 of the third switching element $18_3$ and the first terminal 20 of the fourth switching element $18_4$. The fourth antiferromagnet terminal $19_4$ is jointly connected to the second terminal 21 of the fourth switching element $18_4$ and the first terminal 20 of the fifth switching element $18_5$.

The antiferromagnetic counter element 2 may include first and second pre-synaptic feedback terminals 15, $15_1$, $15_2$ and the post-synaptic feedback terminal 16. The first pre-synaptic feedback terminal $15_1$ is connected to the third terminal 22 of the first switching element $18_1$. The second pre-synaptic feedback terminal $15_2$ is connected to the second, third, fourth, and fifth switching elements $18_2$, $18_3$, $18_4$, $18_5$ via each third terminal 22.

The post-synaptic feedback terminal 16 is connected to the first terminal 20 of the first switching element $18_1$. The post-synaptic feedback terminal 16 is also connected to the first terminal 20 of the second switching element $18_2$ and the second terminal 21 of the second switching element $18_5$.

The antiferromagnetic counter element 2 also includes a voltage measuring unit (not shown).

The antiferromagnet 17 may be formed of an antiferromagnetic material where an application of a current pulse can manipulate a domain configuration of the antiferromagnetic material.

The antiferromagnet 17 may be an antiferromagnetic system showing locally broken inversion symmetry. The antiferromagnet 17 may be an antiferromagnet with a crystal structure showing locally broken inversion symmetry and where antiferromagnetic sublattices form inversion partners.

The antiferromagnet 17 may be formed of CuMnAs or $Mn_2Au$. The antiferormagnet 17 may be formed of other suitable antiferromagnetic materials.

Referring to Figures 1, 2, 4a, 4b and 4c, operation of the artificial synapse 1 will now be described.

During a classification phase of the artificial neural network 12, the pre-synaptic neuron 13 generates electrical pulses ("pre-synaptic pulses") and the post-synaptic neuron 12 integrates the pre-synaptic pulses. Thus, the pre-synaptic neuron 13 behaves as a voltage or current signal source, such as a discharging capacitor, and the post-synaptic neuron 14 serves as a voltage or current signal sink, such as a current integrator. When a neuron discharges ("fires"), it produces an electrical spike or pulse.

The electrical pulses pass through one or more artificial synapses 1 of different impedances ("weights"). The impedance of the artificial synapse 1 may be electrical or optical.

Learning develops during a learning phase of the artificial synapse 1 by modifying the weight of the artificial synapses 1. The weight is modified by switching a memory state ("the state") of the antiferromagnetic counter element 2 by using feedback signals ("feedback pulse") from both the pre- and post-synaptic neurons 13, 14, as will be described in more detail hereinafter. The feedback signals include the pre-synaptic feedback signals and the post-synaptic feedback signals. The first artificial synapse 1, $1_1$ holds positive synapse weights only.

Herein, "the state" of the antiferromagnetic counter element 2 (Figure 3) is set according to the proportion of antiferromagnetic domains (comprised in the antiferromagnet 17) with their specific Neel-vector orientation in a given orientation. The antiferromagnet 17 can exist in a positive state ("accumulation state"), wherein the majority of antiferromagnetic domains have specific Neel-vector orientation at either +45° or +135° to a direction of a write pulse (which will be explained in more detail hereinafter) applied to the antiferromagnet 17. The antiferromagnet 17 can exist in an opposite, negative state ("depletion state"), wherein the majority of antiferromagnetic domains have specific Neel-vector orientation at either -45° or -135° to a direction of the write pulse.

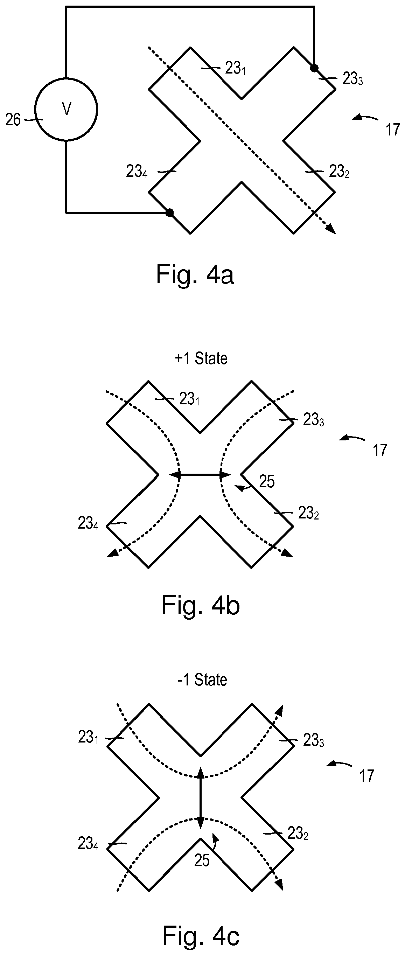

Figure 4b shows the antiferromagnet 17 in the positive state and Figure 4c shows the antiferromagnet 17 in the negative state. The desired orientation of the antiferromagnetic domains 25 for each state are indicated in the figures.

The antiferromagnet 17 may alternatively exist in a neutral state. In the neutral state, the antiferromagnetic domains are randomly ordered.

The artificial synapse 1 may be in a pre-learned or pre-loaded mode. This means that the artificial synapse 1 does not undergo the learning phase. A known succession of pulses are applied to the antiferromagnetic counter element 2 in order to set or load in a known state.

During the learning phase, the artificial synapse $1_1$ operates in two distinct modes: a read mode and a write mode.

Referring to Figures 1 and 4a, the read mode will now be described.

During the read mode, the state of the antiferromagnetic counter element 2 is read. The weight of the weighted switch 4 is then set according to the state.

To read a state, a read signal is applied across the antiferromagnet 17 from a first arm $23_1$ to a second, opposite arm $23_2$. The read signal may be a pulse ("read pulse"). The read signal may be a DC current. A transverse voltage ("readout voltage") is measured across third $23_3$ and fourth $23_4$ opposite arms to produce a readout signal. The transverse voltage is measured using the voltage measuring unit 26.

The readout signal is fed from the readout terminal 11 to the third terminal 10 of the weighted switch 4. The impedance of the weighted switch 4 is set on receiving the readout signal. The impedance of the weighted switch 4 is equivalent to the impendence (or "weight") of the artificial synapse $1_1$. The impedance of the weighted switch 4 is dependent on the transverse voltage.

After the read signal has been applied and the weight of the artificial synapse 1 has been set, the control switch 3 electrically disconnects the antiferromagnetic counter element 2 from the weighted switch 4 in response to receiving the coupling control signal.

Referring to Figures 3, 4b, and 4c, the write mode will now be described. During the write mode, the state of the antiferromagnetic counter element 2 may be switched.

Upon receiving feedback signals, the switching elements 18 are arranged so as to provide electrical pulses ("write pulses") through the antiferromagnet 17. The characteristics of the feedback signals will be described in more detail later with reference to example algorithms.

To set the positive state (Figure 4b), a first write pulse is provided along a first conduction path in the antiferromagnet 17 and a second write pulse is provided along a second conduction path of the antiferromagnet 17. The first conduction path runs from the first arm $23_1$ to the fourth arm $23_4$. The second conduction path runs from the third arm $23_3$ to the second arm $23_2$. The first and second write pulses are positive write pulses.

To set the negative state (Figure 4c), a third write pulse is provided along a third conduction path in the antiferromagnet 17 and a fourth write pulse is provided along a fourth conduction path of the antiferromagnet 17. The third conduction path runs from the first arm $23_1$ to the third arm $23_3$. The fourth conduction path runs from the fourth arm $23_4$ to the second arm $23_2$. The third and fourth write pulses are negative write pulses.

A pair of positive or negative write pulses is applied to the antiferromagnet 17 over one write cycle.

The antiferromagnet 17 counts in a "+1" or "-1" increment ("countable state"). A count of +1 indicates a pair of positive pulses has been applied over one write cycle, whereas a count of -1 indicates a pair of negative pulses has been applied over one write cycle.

The state of the antiferromagnet 17 may be switched when a pair of write pulses are applied that are of an opposite sign to the pair of write pulses applied in the preceding cycle.

Response of readout signal strength to application of write pulses will now be described. The strength of the readout signal corresponds to the impedance of the weighted switch 4 (Figure 1).

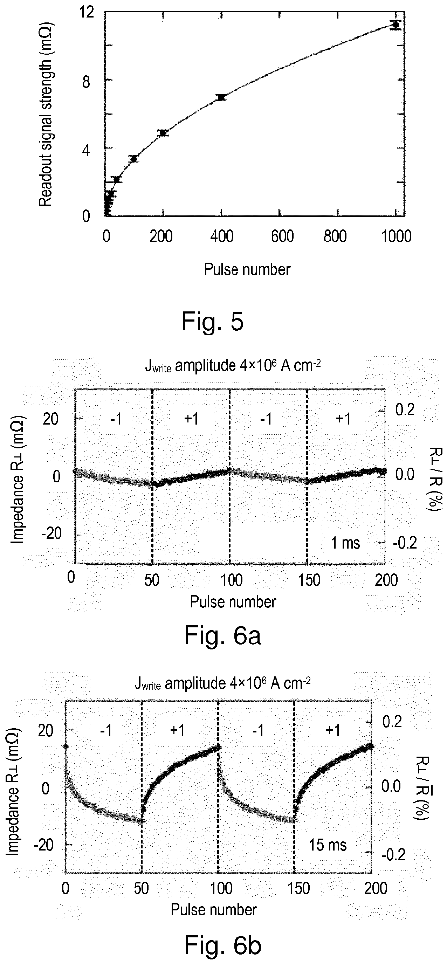

Referring to Figure 5, the strength of the readout signal increases with the application of successive positive pulses or successive negative pulses. These pulses are applied to the antiferromagnet 17 (Figure 3) in the neutral state.

Specifically, the strength of the readout signal follows a limited square root function:

$$Readout(x) = \begin{cases} sign(x) * A * (\|x\|)^{\frac{1}{2}}, & \|x\| < maxCount \\ B * sign(x), & \|x\| \geq maxCount \end{cases} \tag{1}$$

In equation 1, Readout(x) is the readout signal strength in mΩ, the magnitude of x is the number of successive write current pulses, $sign(x) = \frac{x}{|x|}$ if x!=o, A and B are constants, and maxCount in the maximum number of countable states.

Figures 6a and 6b show how the impendence of the weighted switch 4 (Figure 1) varies with number of pulses for a given pulse length.

Referring to Figure 3 and Figures 6a and 6b, the strength of the readout signal varies when both positive (+1) and negative write pulses are applied to the antiferromagnet 17. Successive positive or negative counts have an accumulative or depletive effect respectively on the impedance of the artificial synapse 1 (Figure 1). In the graphs, pulse numbers 1 to 50 and 101 to 150 correspond to negative increments of the antiferromagnet 17 and pulse numbers 51 to 100 and 151 to 200 correspond to positive increments of the antiferromagnet 17.

The strength of the readout signal (or the impedance) is influenced by the write pulse length. A stronger switching response is measured for a first pulse length of, for example, 15 ms (Figure 6b) compared to a second pulse length of, for example, 1 ms (Figure 6a) for a current density of $4 \times 10^6 Acm^{-2}$.

The pulse length of a write pulse applied to the antiferromagnet 17 is between 1 ps and 1 μs.

The current density of a write pulse is between $10^6$ and $10^{10}$ Acm$^{-1}$.

The state switching characteristics of the antiferromagnet 17 will now be described in more detail.

The energy required to add an additional state scales approximately linearly with each additional state. The antiferromagnet 17 may be modelled as having a linear population density of antiferromagnetic domains which require different amounts of energy to switch. If the antiferromagnet 17 contains a population of domains which are already in a positive state or negative state, the domains with the lowest switching energy requirements switch first. These domains are in a neutral state or an opposite state of the state being written.

Rotating the write pulse direction by 90° inverts the action of the domains. The domains in the positive state at the write pulse direction along 0° assume the negative state if the write pulse direction is along 90°. Thus a given domain population has different switching energies for the positive, negative, and neutral states.

When both positive and negative write pulses are applied to the antiferromagnet 17, the readout voltage (transverse voltage) will approximately follow Algorithm 1.

<u>Algorithm 1</u>

$$x = AppliedPulseEnergy * PulseSign$$

**while** $|x| > 0$

    $i = index\ of\ AFMState\ with\ the\ lowest\ switching\ energy\ in\ the\ opposite$

    $state\ of\ the\ applied\ pulse\ or\ in\ the\ neutral\ state$

    **if** $E(i) \leq |x|$

        $AFMState\ [i] = sign(x)$

        $x = x - sign(x) * E(i)$

    **else**

        $switch = RND(\ x/E(i))$

        **if** $switch$

            $AFMState\ [i] = sign(x)$

        $x = 0$

$$V_{read} = C \sum_{i}^{N} AFMState\ [i]$$

In Algorithm 1, AppliedPulseEnergy is the pulse energy, PulseSign is an integer (either - 1 or +1), AFMState is an array of length N, where each element of the array is either -1 , 0 or +1 to represent a domain in either a depletion, neutral or accumulation state respectively, N is the maximum number of countable states in the antiferromagnet 17, $E(i)$ is a function that scales quadrically with $i$ and represents the energy required to switch state $i,$ RND(P) is a function where P is $x/E(i)$, and C is a constant.

PulseSign having an integer value of +1 or -1 determines if the pulse generates a depletion or accumulation state respectively. RND(P) accepts one input, P, and outputs either True with a probability P or False with a probability 1-P.

The readout voltage will increase up to a set limit with respected to a bias voltage.

If the write pulses switch direction or polarity, the bias voltage is set to the readout voltage before the latest current pulse and the number of successive counts is reset to zero. This resulting nonlinear switching can be seen in Figures 6a and 6b.

Spiked-Time Dependent Plasticity (STDP) algorithm

Referring to Figures 1 and 2, the artificial synapse 1 may be configured to implement an STDP algorithm when the artificial synapse 1 is incorporated into the artificial neural network 12.

A basic STDP algorithm determines the change of the synapse weight between a given pre-synaptic neuron 13 and postsynaptic neuron 14 according to the time difference between the pre-synaptic and post-synaptic spikes.

$$\Delta w_{i,j} = f(t_i - t_j) \qquad (2)$$

where $\Delta w_{i,j}$ is the change in synapse weight, $(t_i - t_j)$ is the time difference between pre-synaptic and post-synaptic spikes, and $f$ is a function of a learning curve. The learning curve of an algorithm is dependent on the application, as will be explained in more detail hereinafter.

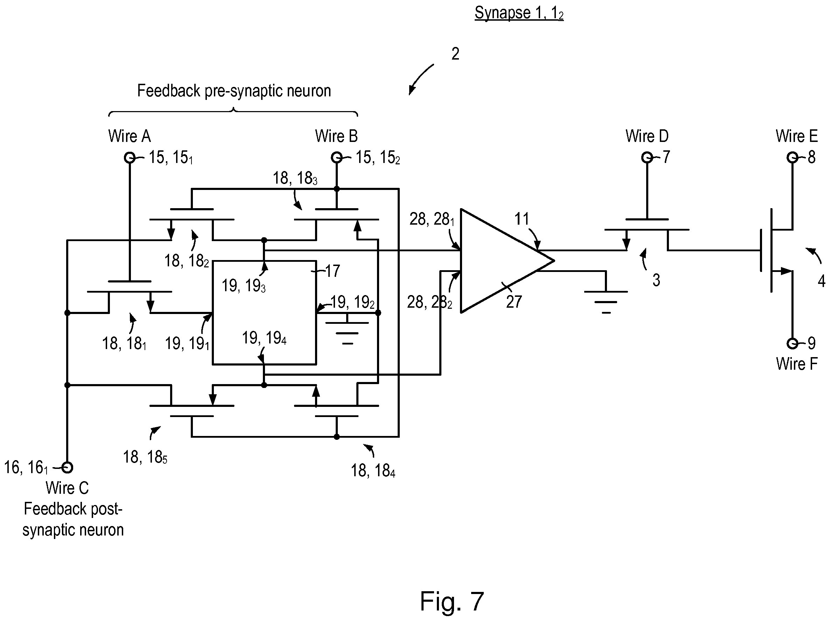

Referring to Figure 7, a second artificial synapse $1_2$ is shown. The second artificial synapse $1_2$ is suitable for implementing an STDP algorithm. The artificial synapse $1_2$ may be implemented in the artificial neural network 12 (Figure 2).

The artificial synapse $1_2$ includes the antiferromagnetic counter element 2 (Figure 3), the control switch 3 and the weighted switch 4.

Wires A, B, and C are connected to the antiferromagnetic counter element 2.

Wire A is connected to the first pre-synaptic feedback terminal 15, $15_1$. Wire B is connected to the second pre-synaptic feedback terminal 15, $15_2$. Wire C is connected to the post-synaptic feedback terminal 16.

An amplifier 27 functions as the voltage measuring unit 26. First and second amplifier input terminals 28, $28_1$, $28_2$ are connected to the third and fourth antiferromagnet terminals $19_3$, $19_4$ respectively. Thus, the amplifier 27 is provided across the third and fourth antiferromagnet terminals $19_3$, $19_4$ in order to measure the transverse voltage.

An output terminal of the amplifier 27 functions as the readout terminal 11 (Figure 1). The control switch 3 and the weighted switch 4 are connected to the readout terminal 11 in a similar way as hereinbefore described in relation to the first artificial synapse $1_1$ (Figure 1).

Wire D provides the coupling control signal to the second terminal 7 of the control switch 3. Wire E couples the first terminal 8 of the weighted switch 4 to a pre-synaptic neuron 14. Wire F couples a third terminal 9 of the weighted switch 4 to a post-synaptic neuron 13.

The second artificial synapse $1_2$ operates in a read and write mode in a similar way to the first artificial synapse $1_1$ (Figure 1).

During a cycle of the write mode, wire D is held at -1 V and the pre-synaptic and post-synaptic neurons 13, 14 communicate via the weighted switch 4. Feedback signals are applied along wires A, B and C to modify the state of the antiferromagnet 17.

During a cycle of the read mode, wires A, C and D are held at +1V and wires B, E and F are held at 0V.

Table 1 describes in greater detail the functionality of each wire connection in the artificial synapse $1_2$.

Table 1

| Connection | Voltage | Functionality |
|---|---|---|
| Wire A | 0V to 1V | Controls the magnitude and time window of the write pulses through the antiferromagnet 17. |
| Wire B | -1V to 1V | Controls the magnitude, direction and time window of the write pulses through the antiferromagnet 17. Controls the direction of the read signal. |
| Wire C | 0V or 1V | Controls magnitude and timing of the voltage of |
| | | the write pulses applied to the antiferromagnet 17. |
| Wire D | -1V or 1V | Sets the state of the synapse in either a reading or running cycle |
| Wire E | -1V to 1V | Connects the output of the pre-synaptic neuron 13 to the post-synaptic neuron 14. The pre-synaptic neuron 13 behaves as a discharging capacitor. |
| Wire F | Effective 0V | Connects the input of the post-synaptic neuron 14 to the pre-synaptic neuron 13. The post-synaptic neuron 14 behaves as a current integrator. The voltage at the input of the integrator is maintained at 0V. |

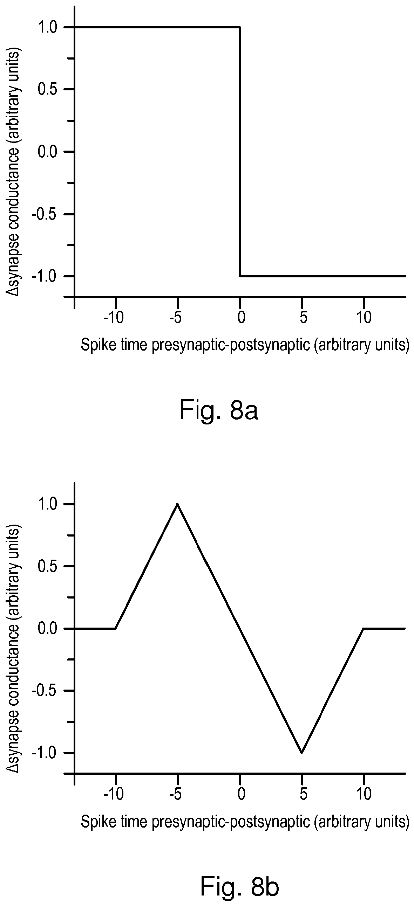

Figures 8a and 8b show first and second example learning curves of the STDP algorithm respectively. These learning curves are used to determine the appropriate change in synapse weight for a given STDP algorithm.

Referring to Figures 2 and 7, the first example learning curve (Figure 8a) is developed by applying a positive voltage along wire B if the pre-synaptic neuron 13 fires first and applying a negative voltage along wire B if the post-synaptic neuron 14 fires first. A feedback signal from the post-synaptic neuron 14 is applied along wire C when the post-synaptic neuron 14 fires.

The ratio of applied voltage magnitudes along wire A and B controls the ratio of the positive to negative counter increments. The first example learning curve (Figure 8a) is produced when the voltage magnitude along wire A and B for both the negative and positive feedback signals are identical. This results in equally weighted positive and negative counter increments.

To illustrate, an STDP algorithm having the first example learning curve will produce a positive change in synapse weight (synapse conduction) when the pre-synaptic neuron 13 fires before the post-synaptic neuron 14 (negative time difference). The magnitude of the positive change in synapse weight will be the same for all negative time differences.

The second example learning curve (Figure 8b) is developed by controlling the time windows and voltage magnitudes of the feedback signal along wires A, B and C in a similar way to the first example learning curve (Figure 8a).

STDP Simulation

Referring to Figures 2, 7, 9, and 10, a simulated STDP algorithm for image recognition will now be described.

The neural network 12 for this simulated STDP algorithm contains nine input neurons and nine output neuron. The artificial synapses 1, $1_2$ are randomly weighted and connect the input and output neurons.

The initial state of the antiferromagnet 17 was randomly generated and was set between -50 and +50 counts. The learning curve was an uneven step function resulting in +1 counter increment for the pre-synaptic neuron 13 firing first, and -9 counter increments for the pre-synaptic neuron 13 firing after the post-synaptic neuron 14.

The output of the pre-synaptic neurons 13 acts as an ideal discharging capacitor and the input of the post-synaptic neurons 14 acts as an ideal circuit integrator. All other electrical processes in the neurons are not considered. The maximum readout signal of the antiferromagnetic counter element 2 is 20 m$\Omega$. Using a 10 mA probe current, a readout voltage of 200 $\mu$V is produced. The required switch current (the current running through the antiferromagnet 17) is 20 mA.

The maximum number of countable states is assumed to be 2000. The amplifier 27 has a 2500 V/V gain. The amplifier 27 is configured to output a voltage offset that enables the voltage across the weighted switch 4 to be between 0 and 1 V.

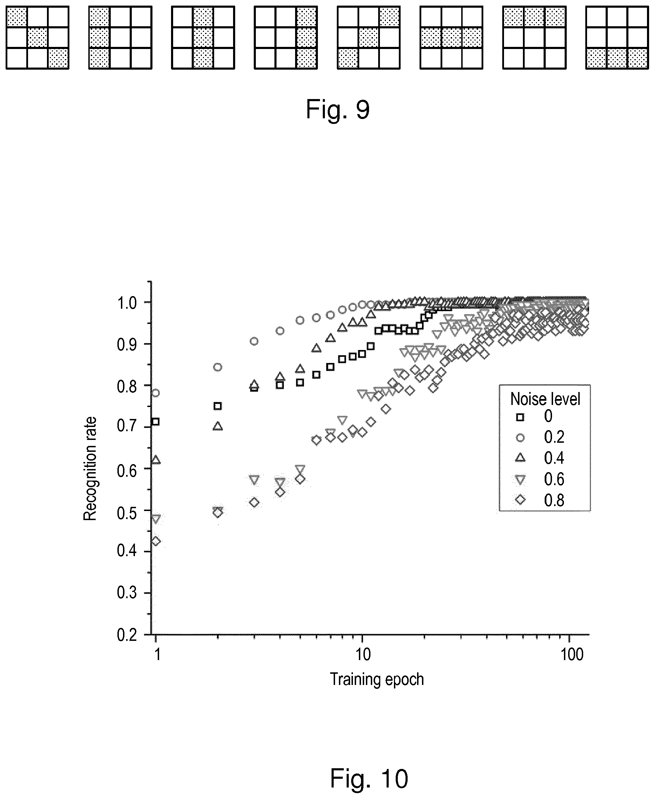

The neural network for this simulated STDP algorithm is presented a series of binary 3×3 pixel images from one of the eight possible patterns (Figure 9). Each pixel is assigned a value, such as 1. Additional noise is added to each pixel by generating a random number between 0 and the set noise level and adding it to the image.

Each pixel corresponds to one of the pre-synaptic neurons 13. The signal representing a given pixel value is integrated by a given pre-synaptic neuron 13 at a fixed time step. The pre-synaptic neuron 13 fires once the neuron 13 reaches a set threshold. The signal produced by the pre-synaptic neuron 13 is a time series signal. The electrical spikes generated by the pre-synaptic neurons 13 firing are transmitted to all of the post-synaptic neurons 14 via the second artificial synapses $1_2$.

The spike produced by the pre-synaptic neuron 13 is generated by discharging a capacitor. The impedance seen from the capacitor is the parallel impendence (weight) of the synapses $1_2$ connecting the pre-synaptic neuron 13 to all of the post-synaptic neurons 14.

The post-synaptic neurons 14 integrate the charge from the pre-synaptic neurons 13. When the post-synaptic neuron 14 reaches a set threshold, an output spike is generated. Lateral inhibition then resets all post-synaptic neurons 14.

The first output spike after the presentation of a new input image (Figure 9) classifies the output, meaning that image recognition can be performed at the hardware level rather than by using a remote cloud server. Learning occurs through feedback wires connecting the first post-synaptic neuron 14 that fired and all of the pre-synaptic neurons 13.

During a training iteration of the neural network 12 for this simulated STDP algorithm, one pattern with the set level of noise was presented to the network. The results of the simulation were repeated 200 times and the recognition rate was averaged for set numbers of training iterations.

Figure 10 shows a graph of recognition rate against training epoch for this simulation.

The neural network 12 for this simulated STDP algorithm is able to reliably predict the correct output up to a set noise level of 0.6. Other neural networks performing STDP algorithms show similar recognition rates for similar images, for example the memristor-based network disclosed in Boyn, S. et al. "Learning through ferroelectric domain dynamics in solid-state synapses". Nat. Commun. 8, 14736 (2017).

Spiking Rate Network (SRN) algorithm

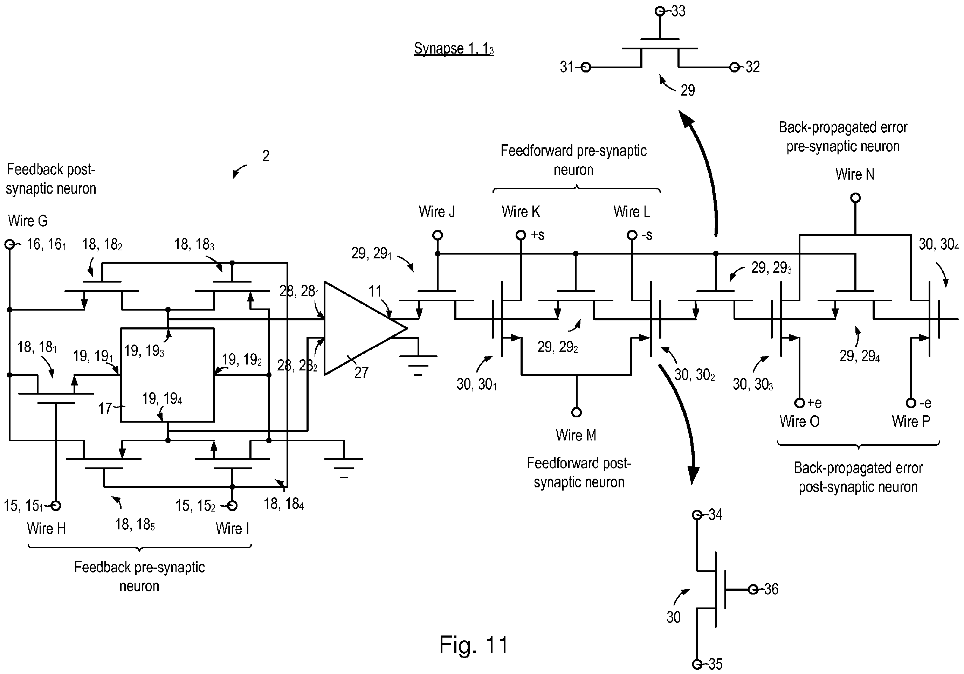

Referring to Figure 2 and Figure 11, a third artificial synapse 1, $1_3$ may be configured to implement an SRN algorithm. The third artificial synapse $1_3$ may be incorporated into the artificial neural network 12 in a similar way to the first artificial synapse $1_1$ (Figure 1).

The artificial neural network 12, configured for SRN learning, is multi-layered. The first layer of the multi-layer neural network 12 is an input layer comprising the pre-synaptic neurons 13. The pre-synaptic neurons 12 of the input layer provide neuron signals to a hidden layer comprising the post-synaptic neurons 14. The hidden layer of post-synaptic neurons 14 provides neuron signals to further hidden layers (not shown), or to an output layer of neurons (not shown).

An SRN algorithm includes a feedforward algorithm and a back-propagated algorithm.

To implement the feedforward algorithm, the input layer neurons (pre-synaptic neurons 13) integrate an input vector (representing input data) and generate a feedforward spike once the accumulated charge reaches a predefined threshold. The feedforward spike is a square pulse with a set voltage biasing all of the weighted switches 30 of the artificial synapses $1_3$ in the saturation regime. The spike also resets the integrator.

The post-synaptic neurons 14 integrate the (weighted) feedforward spikes. Once a set threshold is reached, a feedforward spike is generated from a given post-synaptic neuron 14. The feedforward spike propagates deeper into the network. In other words, the feedforward spike is provided to another hidden layer. The post-synaptic integrator is reset. This process repeats for each additional hidden layer, until the feedforward spikes are provided to an output layer (not shown). When an output neuron fires, the output is a train of Dirac-Delta pulses. The average spiking rate of the train encodes the output value.

The spikes propagating through the input, hidden and output layers in the forward direction described above are feedforward spikes performing feedforward propagation.

The back-propagation algorithm is similar to the feedforward algorithm, but operates in the opposite direction.

The difference ("error") between the average spiking rate from the output neuron (not shown) and a pre-set average spiking rate is integrated by the output neuron (not shown) using an error integrator. When the accumulated charge reaches a set threshold, the error integrator resets and a negative or positive spike (depending on the sign of the error) propagates back through the artificial synapses $1_3$. The negative or positive spike ("back-propagated error spike") is integrated by previous layers of neurons. Once sufficient charge is accumulated in the error integrator of the neurons, the error integrator is reset and another back-propagated error spike is propagated to a further layer of neurons.

For each feedforward spike output by a neuron in the output layer (not shown), a back-propagated error spike is generated in the opposite direction. In order to decouple the feedforward signal from the back-propagated error signal, either a secondary artificial synapse (not shown) is required or the back-propagation occurs after the forward propagation is finished.

A given neuron in the previous layer will not integrate the back-propagated error signal if that neuron did not generate a spike during the forward propagation. This limits the feedback to only occur on active neurons.

When a back-propagated error spike is transferred to a previous layer, the weight of an artificial synapse $1_3$ through which the error signal was transferred is modified.

The back-propagation may terminate after a set amount of time, or when a set error rate is reached. The back-propagation may be continuous.

The weight of the artificial synapse $1_3$ is modified based on the leaning rate, the sign of a back-propagated error spike from a post-synaptic neuron 14, and a number of output spikes generated by the pre-synaptic neuron 13 during the feedforward algorithm:

$$\Delta W_{i,j} = -\eta * \overline{c_i} * s_j \qquad (3)$$

where $\Delta W_{i,j}$ is the change in synapse weight between an $i^{th}$ pre-synaptic neuron 13 and a $j^{th}$ post-synaptic neuron 14 in m$\Omega$, $\eta$ is the learning rate in m$\Omega$/spiking rate, $\overline{c_i}$, is the number of output spikes generated by the $i^{th}$ pre-synaptic neuron 13, and $s_j$ is sign of the back-propagated error spike from the $j^{th}$ post-synaptic neuron 14.

Referring to Figure 11, an operation of the third artificial synapse $1_3$ implementing an SRN algorithm will now be described.

The third artificial synapse $1_3$ includes the antiferromagnetic counter element 2 as hereinbefore described referring to Figure 7.

Wires G, H, and I are connected to the antiferromagnetic counter element 2. Wire G is connected to the post-synaptic feedback terminal 16. Wires H and I are connected to the first and second pre-synaptic feedback terminals $15_1$, $15_2$ respectively.

The third artificial synapse $1_3$ also includes a plurality of control switches 29 and a plurality of weighted switches 30. The plurality of control switches 29 consist of fist, second, third, and fourth control switches 29, $29_1$, $29_2$, $29_3$, $29_4$. Likewise, the plurality of weighted switches 30 consist of fist, second, third, and fourth control switches 30, $30_1$, $30_2$, $30_3$, $30_4$.

Each control switch 29 has a conduction path between first and second terminals 31, 32 whose conductivity is controlled by a third terminal 33. Likewise, each weighted switch 30 has a conduction path between first and second terminals 34, 35 whose conductivity is controlled by a third terminal 36.

The control switches 29 included in the third artificial synapse $1_3$ are similar to the control switch 3 included, for example, in the first artificial synapse 1, $1_1$ (Figure 1). The weighted switches 30 included in the third artificial synapse $1_3$ are similar to the weighted switch 4 included, for example, in the first artificial synapse $1_1$ (Figure 1).

A wire J is connected to the third terminal 33 of each control switch 29. The coupling control signal is applied to each third terminal 33 via wire J.

The control switches 29 are connected in series along their first and second terminals 31, 32. For example, the second terminal 32 of the first control switch $29_1$ is connected to the first terminal 31 of the second control switch $29_2$. The first terminal 31 of the first control switch $29_1$ is connected to the readout terminal 11.

A wire K is connected to the first terminal 34 of the first weighted switch $30_1$. A wire L is connected to the first terminal 34 of the second weighted switch $30_2$. The first terminal 34 of the first weighted switch $30_1$ is for receiving the positive feedforward spikes (+s), whereas the first terminal 34 of the second weighted switch $30_2$ is for receiving the negative feedforward spikes (-s). The second terminal 35 of each first and second weighted switch $30_1$, $30_2$ is for outputting the feedforward spikes to post-synaptic neurons 14 (Figure 2). The second terminal 35 is connected to a wire M. The first and second weighted switches $30_1$, $30_2$ may be n-type and p-type transistors respectively.

The second terminal 35 of the third weighted switch $30_3$ is for receiving a positive back-propagated error spike (+e) via a wire O. The second terminal 35 of the fourth weighted switch $30_4$ is for receiving a negative back-propagated error spike via a wire P. The third and fourth weighted switches $30_3$, $30_4$ are jointly connected to a wire N via first terminals 34 to output the back-propagated error spike via the wire N. The third and fourth weighted switches $30_3$, $30_4$ may be n-type and p-type transistors respectively.

The third terminal 36 of each weighted switch 30 is connected to the conduction path of the control switches 29. Specifically, the third terminal 36 of the first weighted switch $30_1$ is jointly connected to the second terminal 32 of the first control switch $29_1$ and the first terminal 31 of the second control switch $29_2$. The third terminal 36 of the second weighted switch $30_2$ is jointly connected to the second terminal 32 of the second control switch $29_2$ and the first terminal 31 of the third control switch $29_3$. The third terminal 36 of the third weighted switch $30_3$ is jointly connected to the second terminal 32 of the third control switch $29_3$ and the first terminal 31 of the fourth control switch $29_4$. The third terminal 36 of the fourth weighted switch $30_4$ is connected to the second terminal 32 of the fourth weighted switch $30_4$.

Referring to Figures 2 and 11, Table 2 describes the functionality of each wire connection in the artificial synapse $1_3$.

Table 2

| Connection | Voltage | Functionality |
| --- | --- | --- |
| Wire G | 0V to 1V | Controls magnitude and timing of the writing voltage applied to the antiferromagnet 17. |
| Wire H | -1V, 0V or 1V | Controls the magnitude and time window of the write pulses through the antiferromagnet 17. |
| Wire I | -1V, 0V or 1V | Controls the magnitude, direction and time window of the write pulses through the antiferromagnet 17. Controls the direction of the read signal. |
| Wire J | -1V or 1V | Sets the state of the third artificial synapse $1_3$ in either a reading or running mode. |
| Wire K and Wire L | -1V, 0V or 1V | Connects the feedforward output of the pre-synaptic neuron 13 to the post-synaptic neuron 14. The sign of feedforward spike (*s*) will be either negative or positive depending if the neuron output spike is either exhibitory or excitatory respectively. The first and second switches $30_1$, $30_2$ connected to wires K and L respectively allows the third artificial synapse $1_3$ to control the sign of the feedforward spike (s) integrated by the post-synaptic neuron 14. This allows for negative or positive synapse weights. |
| Wire M | Effective 0V | Connects the feedforward input of the post-synaptic neuron 14 to the pre-synaptic neuron 13. The input to the post-synaptic neuron 14 is a current integrator. The voltage at the input of the integrator is maintained at 0V. |
| Wire O and Wire P | -1V, 0V or 1V | Connects the back-propagated error generated in the post-synaptic neuron 14 to the pre-synaptic neuron error integrator (not shown). The sign of the back-propagated error spike (*e*) will be either negative or positive depending if the error output spike generated by the post-synaptic neuron 14 is either negative or positive respectively. The third and fourth switches $30_3$, $30_4$ connected to wires O and P respectively allows the third synapse $1_3$ to control the sign of the post-synaptic error spike integrated by the pre-synaptic neuron 13. |
| Wire N | Effective 0V | Connects the error input of the pre-synaptic neuron 13 to back-propagated error spikes generated by the post-synaptic neuron 14. The error input to the pre-synaptic neuron 13 behaves as a current integrator. The voltage at the input of the integrator is maintained at 0V. |

The post-synaptic neuron 14 controls the sign of the change in synapse weight. The post-synaptic neuron 14 does this by controlling the direction of current through the first antiferromagnetic counter element 2 by modifying the voltage along feedback wire I.

The magnitude of the change in synapse weight is controlled through feedback wire G by controlling the voltage magnitude of the post-synaptic feedback signal.

To change the weight of the third artificial synapse $1_3$ linearly with $\vec{c_i}$, the voltage from feedback wire G needs to scale with the square root of $\vec{c_i}$. This maintains a linear increase in applied energy during the feedback pulse. Wire H is controlled by the pre-synaptic neuron 14 and determines when the current from wire G is applied to the antiferromagnet 17.

Another way of changing the weight is by maintaining the same voltage from wire G and attaching wire H to the post-synaptic feedback terminal 16 (Wire H is connected to wire G). Thus, the attached first switching element $18_1$ functions as a voltage divider. Therefore, the magnitude of the current through the antiferromagnet 17 is controlled from wire G. The voltage applied from wire H would have to scale with the square root of $\vec{c_i}$. In this configuration, there is only one pre-synaptic feedback terminal.

SRN Simulation

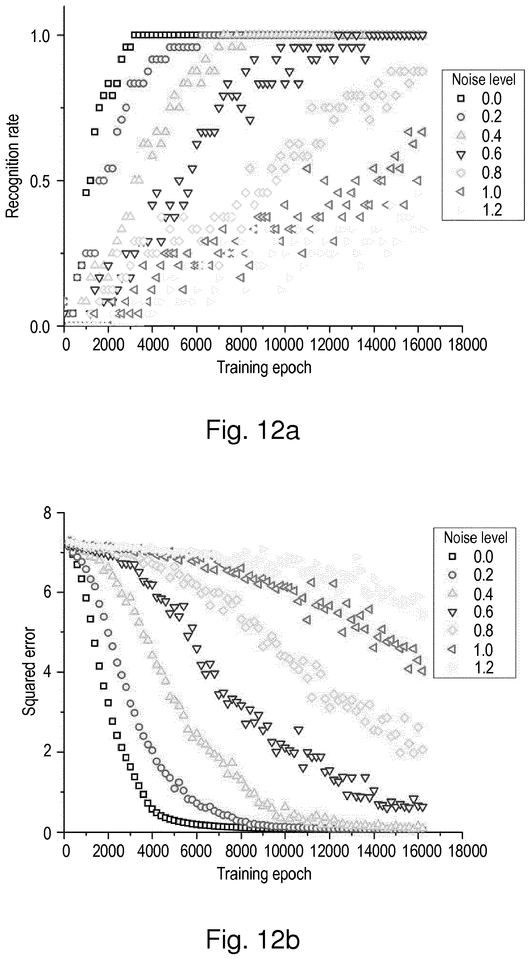

Referring to Figures 11, and 12a and 12b, a simulated SRN algorithm for image recognition will now be described.

For the simulation, all assumptions are the same as the STDP simulation algorithm. However, the output of the pre-synaptic neurons (not shown) behaves as an ideal voltage source ($\pm1$V), rather than a discharging capacitor. The output of the amplifier 27 is in the range of $\pm0.5$V.

The artificial neural network (not shown) for implementing the simulated SRN algorithm includes nine input neurons, one hidden layer with nine neurons and an output layer with eight neurons.

To train the algorithm, the artificial neural network is presented with the series of $3\times3$ pixel grey-level images with noise ( Figure 9). Each of the output neurons was trained to classify one of the $3\times3$ pixel grey-level images.

Figure 12a shows the recognition rate against training epoch of the artificial neural network for given noise levels. The recognition rate is the average of twenty different networks. During each training iteration, all of the patterns in Figure 9 were presented to the artificial neural network once.

Figure 12b shows how the squared error decreases with the number of completed training epochs. The squared error refers to the square of the difference between the pre-set spiking rate and the actual spiking rate from the output neuron.

Antiferromagnetic counter element with tunnel junction

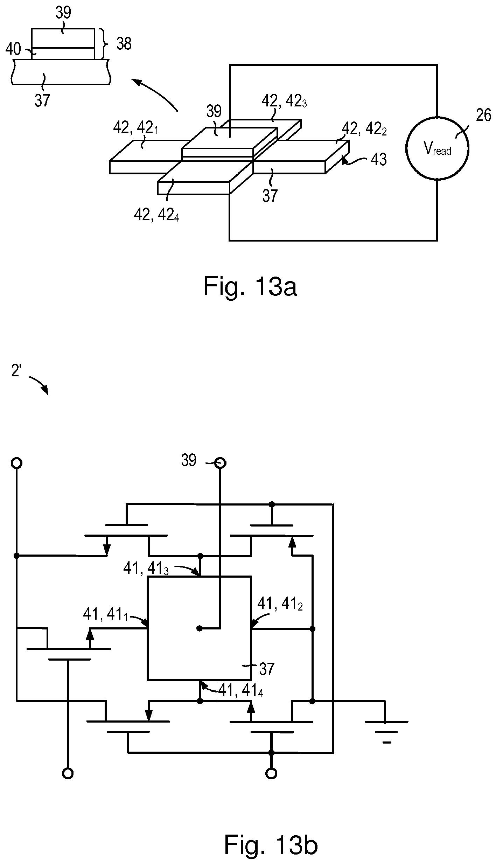

Referring to Figure 13a and Figure 13b, an antiferromagnet 37 will now be described. The antiferromagnet 37 is similar to the antiferromagnet 17 hereinbefore described. However, a tunnel junction 38 is provided on the antiferromagnet 37. The tunnel junction 38 comprises an electrode ("tunnel junction terminal") 39 and a thin (e.g., < 5 nm) layer 40 of dielectric material. The dielectric layer 40 ("insulator") is interposed between the antiferromagnet 37 and the electrode 39.

The dielectric layer 40 may be a dielectric such as MgO or $SiO_2$. The electrode 39 may be formed of tantalum (Ta). Further details regarding the tunnel junction can be found in EP2744002 A1 which is incorporated herein by reference.

The antiferromagnet 37 is incorporated into a tunnel junction counter element 2' as will be explained in more detail hereinafter.

The antiferromagnet 37 includes first, second, third, and fourth antiferromagnet terminals 41, $41_1$, $41_2$, $41_3$, $41_4$. The antiferromagnet 37 has a cruciform shape with first, second, third, and fourth arms 42, $42_1$, $42_2$, $42_3$, $42_4$. Each first, second, third and fourth antiferromagnet terminal 41, $41_1$, $41_2$, $41_3$, $41_4$ is provided on each first, second, third, and fourth arm 42, $42_1$, $42_2$, $42_3$, $42_4$ respectively. So for example the first terminal $41_1$ is provided on the first arm $42_1$. Each antiferromagnet terminal 41 may be provided at an end 43 of each arm 42.

The tunnel junction terminal 39 is connected to a current source. The tunnel junction 38 behaves as a voltage divider.

A voltage ("readout voltage") of the antiferromagnet 37 may be measured across the tunnel junction terminal 39 and one of the antiferromagnet terminals 41, for example the third antiferromagnet terminal 41, $41_3$, when a current is supplied between the tunnel junction terminal 39 and the antiferromagnet terminal 41. The readout voltage is measured by the voltage measuring unit 26 to produce a readout signal indicating the readout voltage. The voltage measuring unit 26 is connected across the tunnel junction terminal 39 and an output terminal (not shown) directly connected to one of the antiferromagnet terminals 41.

The tunnel junction counter element 2' is similar to the antiferromagnetic counter element 2 hereinbefore described. However, the antiferromagnet 37 is in place of the antiferromagnet 17 (Figure 3). The tunnel junction counter element 2' may comprise the voltage measuring unit 26.

The tunnel junction 38 has an area parallel to the cruciform surface of the antiferromagnet 37 of $1 \times 1\mu m$.

The antiferromagnet 37 can be thinner than the antiferromagnet 17 (Figure 3) hereinbefore described. This means that the state of the antiferromagnet 37 can be set using writes pulses with a reduced current in comparison to the antiferromagnet 17 (Figure 3), whilst maintaining a large readout voltage.

Thus, the antiferromagnet 37 helps to maintain a large readout voltage as the current of the write pulses are minimized. This improves the power efficiency of the tunnel junction counter element 2'. The antiferromagnet 37 does not suffer a trade-off between maximizing the readout voltage and minimizing the current of the write pulses.

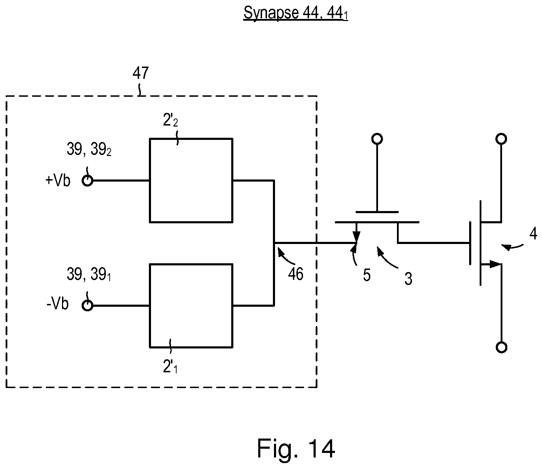

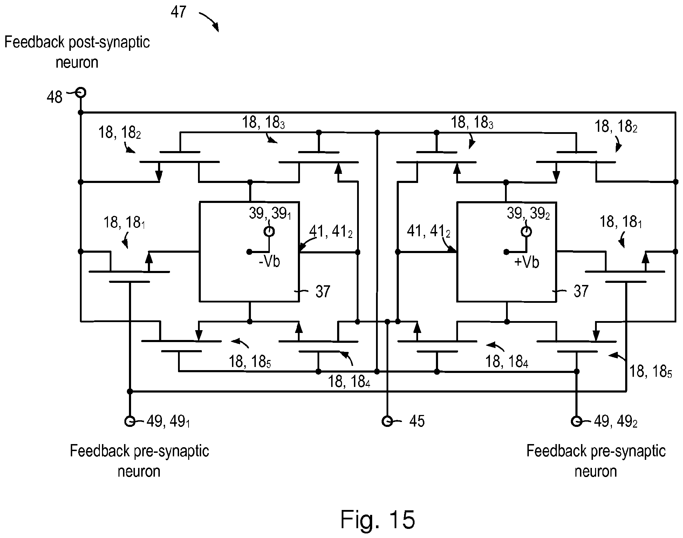

Referring to Figures 14 and 15, a fourth artificial synapse 44, $44_1$ will now be described.

The fourth artificial synapse $44_1$ includes first and second tunnel junction counter elements 2', $2'_1$, $2'_2$, the control switch 3, and the weighted switch 4. The control switch 3 and weighted switch 4 are connected together in the same way as hereinbefore described referring to the first artificial synapse $1_1$ (Figure 1). The first and second tunnel junction counter elements 2', $2'_1$, $2'_2$ include first and second tunnel junction terminals 39, $39_1$, $39_2$ respectively.

Each first and second tunnel junction terminal 39, $39_1$, $39_2$ in the fourth artificial synapse $44_1$ is for receiving a pre-synaptic neuron spike signal ("tunnel junction terminal signal") from a given pre-synaptic neuron 13 (Figure 2). Each pre-synaptic neuron spike signal is of equal voltage magnitude ($V_b$) and opposite polarity. The pre-synaptic neuron spike signals are produced when the given pre-synaptic neuron fires. The signals have an arbitrary voltage magnitude, for example $V_b$ = 1V.

The second terminal 41, $41_2$ of each antiferromagnet 37 is jointly connected to the output terminal 45. The voltage measuring unit 26 (Figure 13a) (not shown) is connected to the output terminal 45 and measures the voltage at the output terminal 45 to produce the readout signal. The voltage measuring unit 26 (Figure 13a) is connected to ground and uses ground as a reference voltage. The voltage measuring unit 26 (Figure 13a) (not shown) provides the readout signal to a readout terminal 46. The readout signal is output from the readout terminal 46. The readout terminal 46 is connected to the first terminal 5 of the control switch 3.

The weight of the weighted switch 4 is set according to the relative orientations of the antiferromagnetic domains within each antiferromagnet 37.

The fourth artificial synapse $44_1$ may be implemented in the artificial neural network 12 (Figure 2).

The two tunnel junction counter elements 2' in the fourth artificial synapse $44_1$ form a double tunnel junction counter element arrangement 47.

Referring to Figure 15, the double tunnel junction counter element arrangement 47 will now be described in more detail.

In the double tunnel junction counter element arrangement 47, the two tunnel junction counter elements 2' share a common post-synaptic feedback terminal 48 in place of separate post-synaptic feedback terminals 16 (Figure 3). Similarly, the two tunnel junction counter elements 2' share a common first pre-synaptic feedback terminal 49, $49_1$ and a common second pre-synaptic feedback terminal 49, $49_2$ in place of separate pre-synaptic feedback terminals 15 (Figure 3).

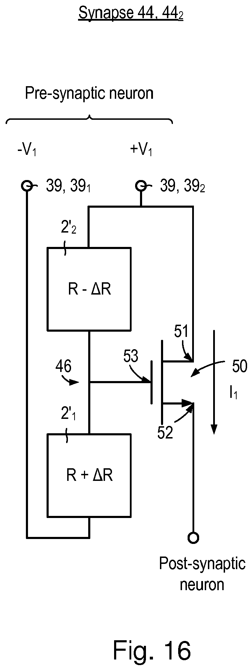

Referring to Figure 16, a fifth artificial synapse $44_2$ will now be described. This synapse $44_2$ may be incorporated into the artificial neural network 12 (Figure 2).

The fifth artificial synapse $44_2$ includes the first and second tunnel junction counter elements $2'_1$, $2'_2$ and a weighted switch 50. The first and second tunnel junction counter elements $2'_1$, $2'_2$ are connected to each other in a similar way as in the double tunnel junction counter element arrangement 44 (Figure 16). The weighted switch 50 has first and second terminals 51, 52 and a third terminal 53 that controls the conduction path between the first and second terminals 51, 52. The weighted switch 50 may be a transistor.

The first tunnel junction counter element 2, $2'_1$ includes the first tunnel junction terminal 39, $39_1$ for receiving a negative pre-synaptic neuron spike signal ($-V_1$) from a given pre-synaptic neuron 13 (Figure 2). The second tunnel junction counter element $2'_2$ includes the second tunnel junction terminal 39, $39_2$ for receiving a positive pre-synaptic neuron spike signal ($+V_1$) from the pre-synaptic neuron 13 (Figure 2). The spike signals are of equal magnitude and opposite polarity. The readout terminal 46 is connected to the third terminal 53 of the weighted switch 50. Thus the readout terminal 46 provides the readout signal to the third terminal 53.

The second tunnel junction terminal $39_2$ is also connected to the first terminal 51 of the weighted switch 50. The second terminal 52 of the weighted switch 50 is for connecting to a post-synaptic neuron 14 (Figure 2).

The current $I_1$ through the weighted switch 50 may be given by:

$$I_1 = \frac{1}{2} U_n C_{ox} \frac{W}{L} (V_1 \frac{\Delta R}{R} - V_t)^2 \qquad (4)$$

Where R is impedance of the antiferromagnet 37 in the neutral state and $\Delta$R is impedance introduced by positive or negative increment in m$\Omega$, $U_n$ is electron mobility of material current I1 flows through (for example silicon), W is width

of transistor in $\mu m$, L is length of transistor in $\mu m$, $C_{ox}$ is capacitance of oxide layer of transistor, $V_t$ is the voltage threshold in V of the transistor.

Current $I_1$ is provided to the post-synaptic neuron 14 (Figure 2) via terminal 52.

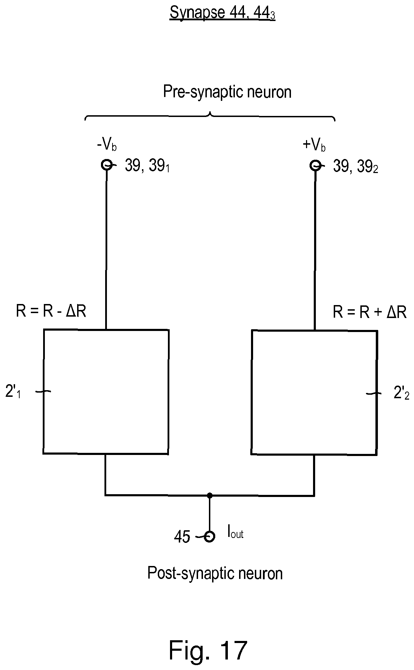

Referring to Figure 17, a sixth artificial synapse 44, $44_3$ is shown. This synapse $44_3$ may be incorporated into the artificial neural network 12 (Figure 2). The sixth artificial synapse $44_3$ is similar to the fifth artificial synapse $44_2$. However, the weighted switch 50 (Figure 16) and the voltage measuring unit 26 (Figure 13a) has been removed. Thus, the output terminal 45 is for coupling to the post-synaptic neuron 14 (Figure 2).

Removing the voltage measuring unit 26 (Figure 13a) helps to improve the power efficiency of the artificial synapse 44. Also, voltage measuring units, such as amplifiers, are large components in relation to the other components in the artificial synapse 44. Thus, removing the voltage measuring unit 26 (Figure 13a) helps to reduce the size of the artificial synapse 44.

The signal output to the post-synaptic neuron 14 has current $I_{out}$ (readout current):

$$I_{out} = V_b \left( \frac{1}{R+\Delta R} - \frac{1}{R-\Delta R} \right) \qquad (5)$$

The post-synaptic neuron 14 (Figure 2) behaves as a current integrator and holds the voltage at terminal 45 at 0V. The post-synaptic neuron 14 (Figure 2) measures the current $I_{out}$ at output terminal 45. Thus the post-synaptic neuron 14 measures the difference in current between the current flowing through the tunnel junctions of the first and second tunnel junction counter elements $2'_1$, $2'_2$.

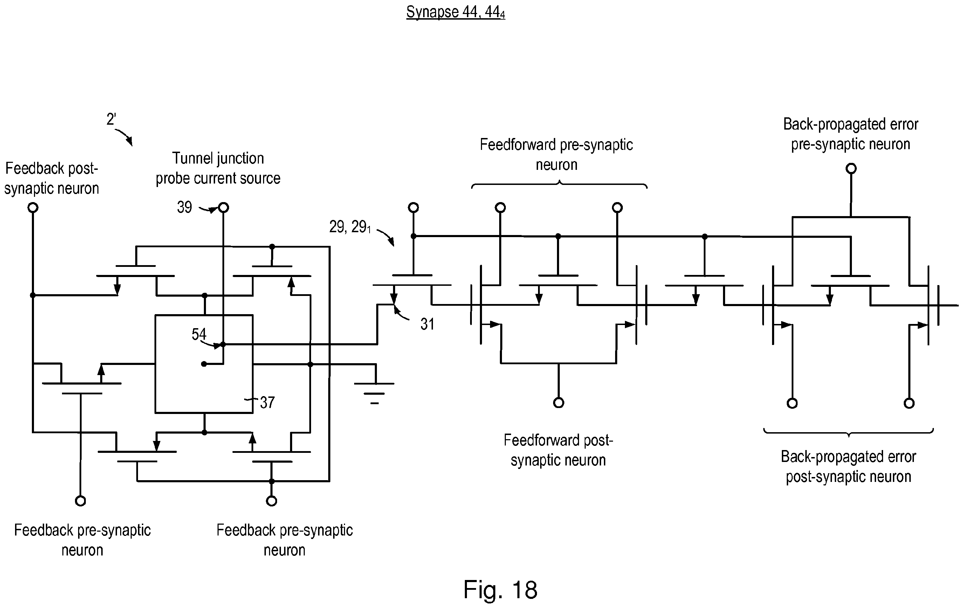

Referring to Figure 18, the tunnel junction counter element 2' may be incorporated into a seventh artificial synapse $44_4$.

The seventh artificial synapse $44_4$ is for use in the artificial neural network 12 (Figure 2) implementing an SRN algorithm, as hereinbefore described referring to the third artificial synapse $1_3$ (Figure 11).

This artificial synapse $44_4$ functions in a similar way to the third example synapse $1_3$. However, the seventh artificial synapse $44_4$ comprises the tunnel junction counter element 2' in place of the antiferromagnetic counter element 2.

A tunnel junction readout terminal 55 is directly connected to the tunnel junction terminal 39. The tunnel junction counter element 2' includes the voltage measuring unit 26 (Figure 13a) (not shown). The voltage measuring unit 26 (Figure 13a) (not shown) is connected across the tunnel junction readout terminal 55 and the output terminal (not shown). Thus the voltage measuring unit 26 (Figure 13a) (not shown) provides the readout signal to the first terminal 31 of the first control switch 29, $29_1$.

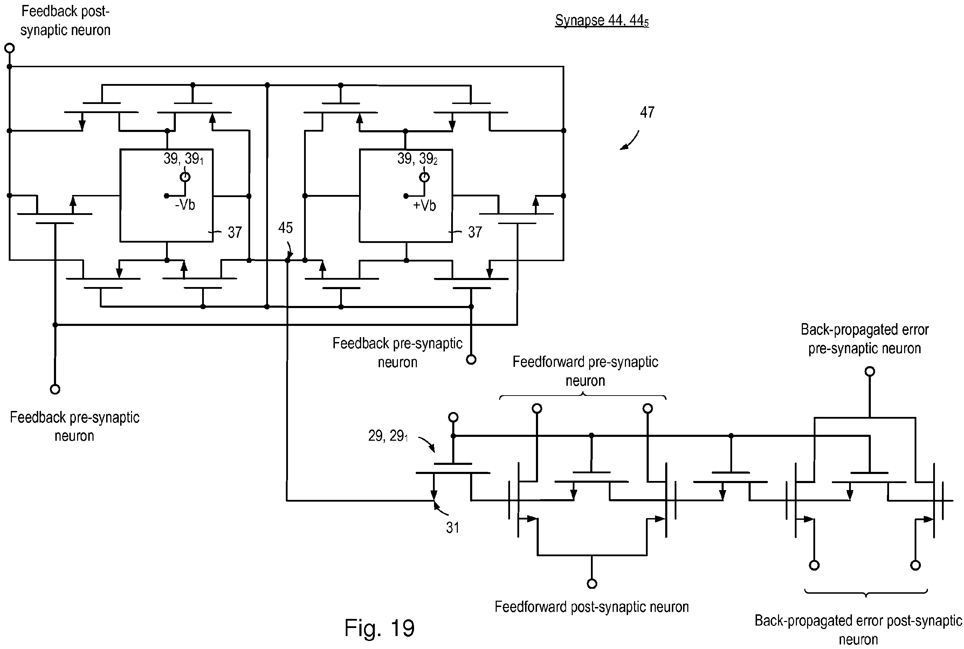

Referring to Figure 19, an eight artificial synapse $44_5$ is shown.

The eighth artificial synapse $44_5$ is similar to the seventh artificial synapse $44_4$. However, the eighth artificial synapse $44_5$ comprises the double tunnel junction counter element arrangement 47 in place of the single tunnel junction counter element 2'. The voltage measuring unit 26 (Figure 13b) (not shown) provides the readout signal to the readout terminal 46 (Figure 14) (not shown) in a similar way as hereinbefore described referring to the fourth artificial synapse 44, $44_1$ (Figure 14). The readout terminal 46 (Figure 14) (not shown) provides the readout signal to the first terminal 31 of the first control switch 29, $29_1$.

Comparison of artificial synapses

Referring to Figures 3 and 13b, the antiferromagnetic counter element 2 and the tunnel junction counter element 2' have several advantages compared to comparison counter elements, such as oxide memristors.

Table 3 below compares the characteristics of comparison counter elements ("memories") to the counter elements 2, 2' included in the artificial synapse 1, 42. In Table 3, the memory "Antiferromagnetic Cruciform" is the antiferromagnetic counter element 2 and the antiferromagnet 17 is formed of CuMnAs. The memory "Antiferromagnetic Tunnel Cruciform" is the tunnel junction counter element 2' and the antiferromagnet 37 is formed of CuMnAs.

Table 3

| Memory | Switch Time | Writing Current Density ($Acm^{-2}$) | Memory Format | Endurance (Cycles) | Retention Time | Reproducibility | Dependence of output signal with size of device | Sensitivty To Stray fields. |
|---|---|---|---|---|---|---|---|---|
| Oxide Memristor | 5 ns to 500 $\mu s$ | $10^6$ | Analogue | $10^5$ to $10^9$ | >1 yrs | Medium | Invariant | ? |

(continued)

| Memory | Switch Time | Writing Current Density (Acm$^{-2}$) | Memory Format | Endurance (Cycles) | Retention Time | Reproducibility | Dependence of output signal with size of device | Sensitivty To Stray fields. |
|---|---|---|---|---|---|---|---|---|
| Organic Memristor | 300 $\mu$s to 50 ms | 1 to 10$^4$ | Analogue | 10$^3$ to 10$^8$ | ~24 hr | Low | Invariant | ? |
| Ferroelectric Tunnel Junction | >100 ns | 10$^4$ to 10$^5$ | Analogue | >10$^6$ | ? | ? | Invariant | Medium |
| Antiferromagnetic Cuciform (CuMnAs) | >100 ps | 10$^6$ to 10$^8$ (Speed dependent) | Analogue | ? (Expected to be similar to MTJ) | 24 hr to 10 yrs | High | Reduces with size | Low |
| Antiferromagnetic Tunnel Cruciform (CuMnAs) | >100 ps | 10$^6$ to 10$^8$ (Speed dependent) | Analogue | ? (Expected to be similar to MTJ) | ? | High | Invariant | Low |
| Magnetic Tunnel Junction (MTJ) | >250 ps | 10$^6$ to 10$^8$ | Binary | 10$^{12}$ to 10$^{15}$ | >10 yrs | High | Invariant | Medium |
| Nanoscale Spintronic Oscillators | X | 10$^7$ | X | High | X | High | X | Medium |

Oxide memristor data was taken from Prezioso, M. et al. "Training and operation of an integrated neuromorphic network based on metal-oxide memristors", Nature, volume 521, page 61-64 (2015) and Yang, J. J. et al.: "High switching endurance in TaOx memristive devices", Appl. Phys. Lett., volume 97, (2010).

Organic memristor data was taken from Li, S. et al.: "Synaptic plasticity and learning behaviours mimicked through Ag interface movement in an Ag/conducting polymer/Ta memristive system", J. Mater. Chem. C, volume 1, page 5292, (2013). Data was also taken from Lei, Y. et al.: "Memristive learning and memory functions in polyvinyl alcohol polymer memristors", AIP Adv., volume 4, (2014). Data was also taken from Zhang, C. et al.: "Synaptic plasticity and learning behaviours in flexible artificial synapse based on polymer/viologen system", J. Mater. Chem. C, volume 4, pages 3217-3223, (2016), and Nawrocki, R. A., Voyles, R. M. & Shaheen, S. E.: "Neurons in polymer: Hardware neural units based on polymer memristive devices and polymer transistors", IEEE Trans. Electron Devices, volume 61, pages 3513-3519, (2014).

Ferroelectric tunnel function data was taken from Boyn, S. et al.: "Learning through ferroelectric domain dynamics in solid-state synapses", Nat. Commun., volume 8, page 14736 (2017).

Magnetic tunnel junction data was taken from Ikeda, S. et al.: "Magnetic Tunnel Junctions for Spintronic Memory and Beyond". IEEE Trans. Elect. Dev. preprint, page 991-1002 (2006) and Khalili Amiri, P. et al.: "Low write-energy magnetic tunnel junctions for high-speed spin-transfer-torque MRAM". IEEE Electron Device Lett. volume 32, page 57-59 (2011).

Nanoscale spintronic oscillation data was taken from Torrejon, J. et al.: "Neuromorphic computing with nanoscale spintronic oscillators". Nature, volume 547, page 428-431 (2017).

Table 3 shows that CuMnAs in a cruciform structure (in memories "AFM cruciform" and "AFM Tunnel Cruciform") exhibits a deterministic multi-level switching capable of counting thousands of pulses at a rate of hundreds of picoseconds.

In general, ferromagnetic counter elements are stable against charge perturbations but not robust in the presence of stray magnetic fields. Antiferromagnetic memories contain magnetic dipole moments of opposite polarity that lock the domains resulting in more stable dipole populations. Thus, Table 3 shows that the antiferromagnetic counter element 2 and tunnel junction counter element 2' have reduced sensitivity to stay fields compared to the comparison counter elements.

The antiferromagnetic counter element 2 and the tunnel junction counter element 2' require similar currents densities to proposed nanoscale spintronic oscillators used in reservoir computing. However, oscillators require a constant current, whilst the counter elements 2, 2' do not, meaning the nanoscale spintronic oscillator requires higher current demands.

The antiferromagnetic counter element 2 and the tunnel junction counter element 2' are preferred in artificial synapses due to their minimal switching time, their deterministic switching and similar writing current densities to magnetic tunnel junctions.

**Claims**

1.  An artificial synapse ($1; 1_1, 1_2, 1_3$) comprising:

    an antiferromagnetic counter element (2) comprising:

    a cruciform antiferromagnet (17) having first, second, third and fourth arms ($23; 23_1, 23_2, 23_3, 23_4$) having first, second, third and fourth terminals ($19; 19_1, 19_2, 19_3, 19_4$) respectively, wherein the first ($23_1$) and second ($23_2$) arms provide a first pair of opposite arms and the third ($23_3$) and fourth ($23_4$) arms provide a second, different pair of opposite arms; and
    a read/write control circuit configured to operate in a read mode and a write mode, wherein:

    the read/write control circuit comprises a plurality of switching elements ($18; 18_1, 18_2, 18_3, 18_4, 18_5$) arranged to select between different conduction paths through the antiferromagnet in response to a set of control signals so as to switch between the read and write modes;
    in the write mode, the switching elements are arranged to switch the antiferromagnet between an accumulation state having a first set of conduction paths and a depletion state having a second set of conduction paths; and
    in a read mode, the switching elements are arranged to select a read conduction path to allow measurement of a readout signal between an opposite pair of terminals;

    a readout circuit configured to provide a readout signal indicating a transverse voltage to a readout terminal (11), wherein the readout circuit comprises a voltage measuring unit (26), wherein:

    the voltage measuring unit is connected across the opposite pair of terminals and connected to the readout terminal; and
    the voltage measuring unit is configured to measure the transverse voltage and to provide the readout signal to the readout terminal, the transverse voltage having a direction transverse to a direction of the read conduction path;

    a coupling circuit comprising at least one control switch ($3, 29; 29_1, 29_2, 29_3, 29_4$) and at least one weighted switch ($4, 30; 30_1, 30_2, 30_3, 30_4$), wherein the at least one control switch is controllable by a coupling control signal to selectively couple and decouple the at least one weighted switch to the readout terminal, and wherein the at least one weighted switch is arranged to receive the readout signal at a terminal (5, 36) of the at least one weighted switch, the impedance of the at least one weighted switch being determined by the transverse voltage.

2.  The artificial synapse (1) of claim 1, wherein the cruciform antiferromagnet (17) is an antiferromagnet with a crystal structure showing locally broken inversion symmetry and where antiferromagnetic sublattices form inversion partners.

3.  The artificial synapse (1) of claim 2, wherein the cruciform antiferromagnet (17) comprises CuMnAs or $Mn_2Au$.

4.  The artificial synapse (1) of any one of claims 1 to 3, wherein the switching elements (18) are field-effect transistors.

5.  The artificial synapse (1) of any one of claims 1 to 4, wherein a write signal provided along the first or second conduction paths has current pulse length of between 1 ps to 1 $\mu$s.

6. An artificial synapse (44; $44_1$, $44_2$, $44_3$, $44_4$, $44_5$) comprising:
at least one tunnel junction counter element (2') comprising:

a cruciform antiferromagnet (37) having first, second, third and fourth arms (42; $42_1$, $42_2$, $42_3$, $42_4$) having first, second, third and fourth terminals (41; $41_1$, $41_2$, $41_3$, $41_4$) respectively, wherein the first ($42_1$) and second ($42_2$) arms provide a first pair of opposite arms and the third ($42_3$) and fourth ($42_4$) arms provide a second, different pair of opposite arms, an electrode (39) and a dielectric layer (40) interposed between the cruciform antiferromagnet and the electrode to form a tunnel junction (38), the electrode providing a tunnel junction terminal; and
a read/write control circuit configured to operate in a read mode and a write mode, wherein:

the read/write control circuit comprises a plurality of switching elements (18; $18_1$, $18_2$, $18_3$, $18_4$, $18_5$) arranged to select between different conduction paths through the cruciform antiferromagnet in response to a set of control signals;
in the write mode, the switching elements are arranged to switch the cruciform antiferromagnet between an accumulation state having a first set of conduction paths and a depletion state having a second set of conduction paths; and
in a read mode, the switching elements are arranged to select a read conduction path to allow output of an output signal, wherein the output signal is output upon the tunnel junction terminal receiving a tunnel junction terminal signal;

an output terminal (45) coupled to at least one of the first, second, third, or fourth terminals for providing the output signal, wherein the output signal indicates the weight of the synapse.

7. The artificial synapse (44) of claim 6, the artificial synapse comprising:

the antiferromagnetic counter element (2') comprising:
a readout circuit configured to provide a readout signal indicating a voltage to a readout terminal (46), wherein the readout circuit comprises a voltage measuring unit (26), wherein:

the voltage measuring unit is connected across the output terminal (45) and a tunnel junction readout terminal (51), the tunnel junction readout terminal being coupled to the tunnel junction terminal (39); and
the voltage measuring unit is configured to measure the voltage and to provide the readout signal to the readout terminal;

a coupling circuit comprising a plurality of control switches (29; $29_1$, $29_2$, $29_3$, $29_4$) and a plurality of weighted switches (30; $30_1$, $30_2$, $30_3$, $30_4$), wherein the plurality of control switches is controllable by a coupling control signal to selectively couple and decouple the plurality of weighted switches to the readout terminal, and wherein the plurality of weighted switches is arranged to receive the readout signal at a terminal (36) of each weighted switch, the impedance of the each weighted switch being determined by the voltage.

8. The artificial synapse (44) of claim 6, the artificial synapse comprising:
first and second tunnel junction counter elements (2'; $2'_1$, $2'_2$) controllable by the set of control signals and jointly coupled to the output terminal (45), wherein;

the output terminal is jointly coupled to the second terminal (41; $41_2$) of each tunnel junction counter element;
the first tunnel junction counter element comprises a first tunnel junction terminal (39, $39_1$) for receiving a first tunnel junction terminal signal; and
the second tunnel junction counter element comprises a second tunnel junction terminal (39, $39_2$) for receiving a second tunnel junction terminal signal;
wherein the first and second tunnel junction terminal signals are of equal magnitude and opposite polarity.

9. The artificial synapse (44) of claim 8, the artificial synapse comprising:
a readout circuit configured to provide a readout signal indicating a voltage to a readout terminal (46), wherein the readout circuit comprises a voltage measuring unit (26), wherein:

the voltage measuring unit is connected across the output terminal (45) and a terminal which is grounded; and
the voltage measuring unit is configured to measure the voltage and to provide the readout signal to the readout terminal.

**10.** The artificial synapse (44) of claim 9, the artificial synapse comprising:

a coupling circuit comprising a weighted switch (50) with first, second, and third terminals (51, 52, 53), wherein;
the first terminal of the weighted switch is coupled to the second tunnel junction terminal (39, $39_2$); and
the third terminal of the weighted switch is coupled to the readout terminal (46) and is configured to control a conduction path between the first and second terminals of the weighted switch.

**11.** The artificial synapse (44) of claim 9, the artificial synapse comprising:
a coupling circuit comprising at least one control switch (3, 29; $29_1$, $29_2$, $29_3$, $29_4$) and at least one weighted switch (4, 30; $30_1$, $30_2$, $30_3$, $30_4$), wherein the at least one control switch is controllable by a coupling control signal to selectively couple and decouple the at least one weighted switch to the readout terminal (46), and wherein the at least one weighted switch is arranged to receive the readout signal at a terminal (5, 36) of the at least one weighted switch, the impedance of the at least one weighted switch being determined by the voltage.

**12.** The artificial synapse (44) of any one of claims 6 to 11, wherein the cruciform antiferromagnet (37) is an antiferromagnet with a crystal structure showing locally broken inversion symmetry and where antiferromagnetic sublattices form inversion partners.

**13.** The artificial synapse (44) of claim 12, wherein the cruciform antiferromagnet (37) comprises CuMnAs or $Mn_2Au$.

**14.** The artificial synapse (44) of any one of claims 6 to 13, wherein the switching elements (18) are field-effect transistors.

**15.** An artificial neural network (12) comprising an array of artificial synapses (1, 44) according to any one of claims 1 to 14.

**Patentansprüche**

**1.** Künstliche Synapse (1; $1_1$, $1_2$, $1_3$), umfassend:

ein antiferromagnetisches Gegenelement (2), umfassend:
einen kreuzförmigen Antiferromagneten (17), der einen ersten, zweiten, dritten und vierten Arm (23; $23_1$, $23_2$, $23_3$, $23_4$), die jeweils einen ersten, zweiten, dritten und vierten Anschluss (19; $19_1$, $19_2$, $19_3$, $19_4$) aufweisen, wobei der erste ($23_1$) und der zweite ($23_2$) Arm ein erstes Paar gegenüberliegender Arme bilden und der dritte ($23_3$) und der vierte ($23_4$) Arm ein zweites, anderes Paar gegenüberliegender Arme bilden; und
eine Lese-/Schreib-Steuerschaltung, die konfiguriert ist, um in einem Lesemodus und einem Schreibmodus betrieben zu werden, wobei:

wobei die Lese/Schreib-Steuerschaltung eine Vielzahl von Schaltelementen (18; $18_1$, $18_2$, $18_3$, $18_4$, 18s) umfasst, die angeordnet sind, um als Reaktion auf einen Satz von Steuersignalen zwischen verschiedenen Leitungspfaden durch den Antiferromagneten zu wählen, um zwischen dem Lese- und Schreibmodus umzuschalten;
wobei die Schaltelemente in dem Schreibmodus angeordnet sind, um den Antiferromagneten zwischen einem Akkumulationszustand, der einen ersten Satz von Leitungspfaden aufweist, und einem Verarmungszustand, der einen zweiten Satz von Leitungspfaden aufweist, umzuschalten; und
wobei die Schaltelemente in einem Lesemodus angeordnet sind, um einen Leseleitungspfad auswählen, um eine Messung eines Auslesesignals zwischen einem gegenüberliegenden Paar von Anschlüssen zu ermöglichen;
eine Ausleseschaltung, die konfiguriert ist, um ein Auslesesignal bereitzustellen, das einem Ausleseanschluss (11) eine Querspannung angibt, wobei die Ausleseschaltung eine Spannungsmesseinheit (26) umfasst, wobei:

die Spannungsmesseinheit über das gegenüberliegende Paar von Anschlüssen verbunden ist und mit dem Ausleseanschluss verbunden ist; und
die Spannungsmesseinheit konfiguriert ist, um die Querspannung zu messen und dem Ausleseanschluss das Auslesesignal bereitzustellen, wobei die Querspannung eine Richtung quer zu einer Richtung des Leseleitungspfads aufweist;
eine Kopplungsschaltung, umfassend mindestens einen Steuerschalter (3, 29; $29_1$, $29_2$, $29_3$, $29_4$) und mindestens einen gewichteten Schalter (4, 30; $30_1$, $30_2$, $30_3$, $30_4$), wobei der mindestens eine Steuerschalter durch ein Kopplungssteuersignal gesteuert werden kann, um den mindestens einen gewichteten Schalter selektiv mit dem Ausleseanschluss zu koppeln und zu entkoppeln, und wobei der mindestens eine gewichtete Schalter angeordnet ist, um das Auslesesignal an einem Anschluss (5, 36) des mindestens einen gewichteten Schalters zu empfangen, wobei die Impedanz des mindestens einen gewichteten Schalters durch die Querspannung bestimmt wird.

2. Künstliche Synapse (1) nach Anspruch 1, wobei der kreuzförmige Antiferromagnet (17) ein Antiferromagnet mit einer Kristallstruktur ist, die eine lokal gebrochene Inversionssymmetrie zeigt und in der antiferromagnetische Unterverbände Inversionspartner formen.

3. Künstliche Synapse (1) nach Anspruch 2, wobei der kreuzförmige Antiferromagnet (17) CuMnAs oder $Mn_2Au$ umfasst.

4. Künstliche Synapse (1) nach einem der Ansprüche 1 bis 3, wobei die Schaltelemente (18) Feldeffekttransistoren sind.

5. Künstliche Synapse (1) nach einem der Ansprüche 1 bis 4, wobei ein Schreibsignal, das entlang des ersten oder zweiten Leitungspfads bereitgestellt wird, eine Stromimpulslänge zwischen 1 ps und 1 $\mu$s aufweist.

6. Künstliche Synapse ($44; 44_1, 44_2, 44_3, 44_4$, 44s), umfassend:

   mindestens ein Tunnelkontaktgegenelement (2'), umfassend:
   einen kreuzförmigen Antiferromagneten (37), der einen ersten, zweiten, dritten und vierten Arm ($42; 42_1, 42_2, 42_3, 42_4$) aufweist, die jeweils einen ersten, zweiten, dritten und vierten Anschluss ($41; 41_1, 41_2, 41_3, 41_4$) aufweisen, wobei der erste ($42_1$) und der zweite ($42_2$) Arm ein erstes Paar gegenüberliegender Arme bilden und der dritte ($42_3$) und der vierte ($42_4$) Arm ein zweites, unterschiedliches Paar gegenüberliegender Arme bilden, eine Elektrode (39) und eine dielektrische Schicht (40), die zwischen dem kreuzförmigen Antiferromagneten und der Elektrode eingefügt sind, um einen Tunnelkontakt (38) zu formen, wobei die Elektrode einen Tunnelkontaktanschluss bereitstellt; und
   eine Lese-/Schreib-Steuerschaltung, die konfiguriert ist, um in einem Lesemodus und einem Schreibmodus betrieben zu werden, wobei:

   wobei die Lese/Schreib-Steuerschaltung eine Vielzahl von Schaltelementen ($18; 18_1, 18_2, 18_3, 18_4$, 18s) umfasst, die angeordnet sind, um als Reaktion auf einen Satz von Steuersignalen zwischen verschiedenen Leitungspfaden durch den kreuzförmigen Antiferromagneten zu wählen;
   wobei die Schaltelemente in dem Schreibmodus angeordnet sind, um den kreuzförmigen Antiferromagneten zwischen einem Akkumulationszustand, der einen ersten Satz von Leitungspfaden aufweist, und einem Verarmungszustand, der einen zweiten Satz von Leitungspfaden aufweist, umzuschalten; und
   die Schaltelemente in einem Lesemodus angeordnet sind, um einen Leseleitungspfad auszuwählen, um eine Ausgabe eines Ausgangssignals zu ermöglichen, wobei das Ausgangssignal ausgegeben wird, wenn der Tunnelkontaktanschluss ein Tunnelkontaktanschlusssignal empfängt;
   einen Ausgangsanschluss (45), der mit mindestens einem von dem ersten, dem zweiten, dem dritten oder dem vierten Anschluss verbunden ist, um das Ausgangssignal bereitzustellen, wobei das Ausgangssignal das Gewicht der Synapse angibt.

7. Künstliche Synapse (44) nach Anspruch 6, die künstliche Synapse umfassend: das antiferromagnetische Gegenelement (2'), umfassend:
   eine Ausleseschaltung, die konfiguriert ist, um ein Auslesesignal bereitzustellen, das einem Ausleseanschluss (46) eine Spannung angibt, wobei die Ausleseschaltung eine Spannungsmesseinheit (26) umfasst, wobei:

   die Spannungsmesseinheit über den Ausgangsanschluss (45) und einen Tunnelkontaktausleseanschluss (51) verbunden ist, wobei der Tunnelkontaktausleseanschluss mit dem Tunnelkontaktanschluss (39) gekoppelt ist; und die Spannungsmesseinheit konfiguriert ist, um die Spannung zu messen und das Auslesesignal an den Ausleseanschluss bereitzustellen;
   eine Kopplungsschaltung, umfassend eine Vielzahl von Steuerschaltern ($29; 29_1, 29_2, 29_3$, 294) und eine Vielzahl von gewichteten Schaltern ($30; 30_1, 30_2, 30_3, 30_4$), wobei die Vielzahl von Steuerschaltern durch ein Kopplungssteuersignal gesteuert werden kann, um die Vielzahl von gewichteten Schaltern selektiv mit dem Ausleseanschluss zu koppeln und zu entkoppeln, und wobei die Vielzahl von gewichteten Schaltern angeordnet ist, um das Auslesesignal an einem Anschluss (36) von jedem gewichteten Schalter zu empfangen, wobei die Impedanz von jedem gewichteten Schalter durch die Spannung bestimmt wird.

8. Künstliche Synapse (44) nach Anspruch 6, die künstliche Synapse umfassend:

ein erstes und ein zweites Tunnelkontaktgegenelement (2'; 2'$_1$, 2'$_2$), die durch den Satz von Steuersignalen gesteuert werden können und gemeinsam mit dem Ausgangsanschluss (45) gekoppelt sind, wobei;
der Ausgangsanschluss gemeinsam mit dem zweiten Anschluss (41; 41$_2$) von jedem Tunnelkontaktgegenelement gekoppelt ist;
das erste Tunnelkontaktgegenelement einen ersten Tunnelkontaktanschluss (39, 39$_1$) zum Empfangen eines ersten Tunnelkontaktanschlusssignals umfasst; und
das zweite Tunnelkontaktgegenelement einen zweiten Tunnelkontaktanschluss (39, 39$_2$) zum Empfangen eines zweiten Tunnelkontaktanschlusssignals umfasst;
wobei die Signale des ersten und des zweiten Tunnelkontaktanschlusses gleich groß und von entgegengesetzter Polarität sind.

9. Künstliche Synapse (44) nach Anspruch 8, die künstliche Synapse umfassend:
eine Ausleseschaltung, die konfiguriert ist, um ein Auslesesignal bereitzustellen, das einem Ausleseanschluss (46) eine Spannung angibt, wobei die Ausleseschaltung eine Spannungsmesseinheit (26) umfasst, wobei:

die Spannungsmesseinheit zwischen dem Ausgangsanschluss (45) und einem geerdeten Anschluss verbunden ist; und
die Spannungsmesseinheit konfiguriert ist, um die Spannung zu messen und dem Ausleseanschluss das Auslesesignal bereitzustellen.

10. Künstliche Synapse (44) nach Anspruch 9, die künstliche Synapse umfassend:

eine Kopplungsschaltung, umfassend einen gewichteten Schalter (50) mit einem ersten, einem zweiten und einem dritten Anschluss (51, 52, 53), wobei;
der erste Anschluss des gewichteten Schalters mit dem zweiten Tunnelkontaktanschluss (39, 39$_2$) gekoppelt ist; und
der dritte Anschluss des gewichteten Schalters mit dem Ausleseanschluss (46) gekoppelt ist und konfiguriert ist, um einen Leitungspfad zwischen dem ersten und dem zweiten Anschluss des gewichteten Schalters zu steuern.

11. Künstliche Synapse (44) nach Anspruch 9, die künstliche Synapse umfassend:
eine Kopplungsschaltung, umfassend mindestens einen Steuerschalter (3, 29; 29$_1$, 29$_2$, 29$_3$, 29$_4$) und mindestens einen gewichteten Schalter (4, 30; 30$_1$, 30$_2$, 30$_3$, 30$_4$), wobei der mindestens eine Steuerschalter durch ein Kopplungssteuersignal gesteuert werden kann, um den mindestens einen gewichteten Schalter selektiv mit dem Ausleseanschluss (46) zu koppeln und zu entkoppeln, und wobei der mindestens eine gewichtete Schalter angeordnet ist, um das Auslesesignal an einem Anschluss (5, 36) des mindestens einen gewichteten Schalters zu empfangen, wobei die Impedanz des mindestens einen gewichteten Schalters durch die Spannung bestimmt wird.

12. Künstliche Synapse (44) nach einem der Ansprüche 6 bis 11, wobei der kreuzförmige Antiferromagnet (37) ein Antiferromagnet mit einer Kristallstruktur ist, die eine lokal gebrochene Inversionssymmetrie aufweist und in der antiferromagnetische Unterverbände Inversionspartner formen.

13. Künstliche Synapse (44) nach Anspruch 12, wobei der kreuzförmige Antiferromagnet (37) CuMnAs oder Mn$_2$Au umfasst.

14. Künstliche Synapse (44) nach einem der Ansprüche 6 bis 13, wobei die Schaltelemente (18) Feldeffekttransistoren sind.

15. Künstliches neuronales Netz (12), umfassend eine Anordnung von künstlichen Synapsen (1, 44) nach einem der Ansprüche 1 bis 14.

**Revendications**

1. Synapse artificielle (1 ; $1_1$, $1_2$, $1_3$) comprenant :
   un élément compteur antiferromagnétique (2) comprenant :

   un antiferro-aimant cruciforme (17) possédant des premier, deuxième, troisième et quatrième bras (23 ; $23_1$, $23_2$, $23_3$, $23_4$) possédant des première, deuxième, troisième et quatrième bornes (19 ; $19_1$, $19_2$, $19_3$, $19_4$) respectivement, lesdits premier ($23_1$) et deuxième ($23_2$) bras fournissant une première paire de bras opposés et lesdits troisième ($23_3$) et quatrième ($23_4$) bras fournissant une seconde paire différente de bras opposés ; et
   un circuit de commande de lecture/écriture configuré pour fonctionner dans un mode lecture et un mode écriture, ledit circuit de commande de lecture/écriture comprenant une pluralité d'éléments de commutation (18 ; $18_1$, $18_2$, $18_3$, $18_4$, $18_5$) agencés pour choisir entre différents chemins de conduction à travers l'antiferro-aimant en réponse à un ensemble de signaux de commande de façon à commuter entre les modes de lecture et d'écriture ;
   dans le mode d'écriture, lesdits éléments de commutation étant agencés pour commuter l'antiferro-aimant entre un état d'accumulation possédant un premier ensemble de chemins de conduction et un état d'appauvrissement possédant un second ensemble de chemins de conduction ; et
   dans un mode de lecture, lesdits éléments de commutation étant agencés pour choisir un chemin de conduction de lecture pour permettre la mesure d'un signal de lecture entre une paire opposée de bornes ;
   un circuit de lecture configuré pour fournir un signal de lecture indiquant une tension transversale à une borne de lecture (11), ledit circuit de lecture comprenant une unité de mesure de tension (26),
   ladite unité de mesure de tension étant connectée aux bornes de la paire opposée de bornes et connectée à la borne de lecture ; et
   ladite unité de mesure de tension étant configurée pour mesurer la tension transversale et pour fournir le signal de lecture à la borne de lecture, la tension transversale possédant une direction transversale à une direction du chemin de conduction de lecture ;
   un circuit de couplage comprenant au moins un commutateur de commande (3, 29 ; $29_1$, $29_2$, $29_3$, $29_4$) et au moins un commutateur pondéré (4, 30 ; $30_1$, $30_2$, $30_3$, $30_4$), ledit au moins un commutateur de commande pouvant être commandé par un signal de commande de couplage pour coupler et découpler sélectivement le au moins un commutateur pondéré à la borne de lecture, et ledit au moins un commutateur pondéré étant agencé pour recevoir le signal de lecture au niveau d'une borne (5, 36) du au moins un commutateur pondéré, l'impédance de l'au moins un commutateur pondéré étant déterminée par la tension transversale.

2. Synapse artificielle (1) de la revendication 1, ledit antiferro-aimant cruciforme (17) étant un antiferro-aimant avec une structure cristalline présentant localement une symétrie d'inversion brisée et où des sous-réseaux antiferromagnétiques forment des partenaires d'inversion.

3. Synapse artificielle (1) de la revendication 2, ledit antiferro-aimant cruciforme (17) comprenant CuMnAs ou $Mn_2Au$.

4. Synapse artificielle (1) de l'une quelconque des revendications 1 à 3, lesdits éléments de commutation (18) étant des transistors à effet de champ.

5. Synapse artificielle (1) de l'une quelconque des revendications 1 à 4, un signal d'écriture fourni le long des premier ou second chemins de conduction possédant une longueur d'impulsion de courant comprise entre 1 ps et 1 $\mu$s.

6. Synapse artificielle (44 ; $44_1$, $44_2$, $44_3$, $44_4$, 44s) comprenant :
   au moins un élément compteur à jonction tunnel (2') comprenant :

   un antiferro-aimant cruciforme (37) possédant des premier, deuxième, troisième et quatrième bras (42 ; $42_1$, $42_2$, $42_3$, $42_4$) possédant des première, deuxième, troisième et quatrième bornes (41 ; $42_1$, $41_2$, $41_3$, $41_4$) respectivement, lesdits premier ($42_1$) et deuxième ($42_2$) bras fournissant une première paire de bras opposés et lesdits troisième ($42_3$) et quatrième ($42_4$) bras fournissant une seconde paire différente de bras opposés, une électrode (39) et une couche diélectrique (40) interposée entre l'antiferro-aimant cruciforme et l'électrode pour former une jonction tunnel (38), l'électrode fournissant une borne de jonction tunnel ; et
   un circuit de commande de lecture/écriture configuré pour fonctionner dans un mode lecture et un mode écriture, ledit circuit de commande de lecture/écriture comprenant une pluralité d'éléments de commutation (18 ; $18_1$, $18_2$, $18_3$, $18_4$, $18_5$) agencés pour choisir entre différents chemins de conduction par l'antiferro-aimant cruciforme en réponse à un ensemble de signaux de commande ;
   dans le mode d'écriture, lesdits éléments de commutation étant agencés pour commuter l'antiferro-aimant cruciforme entre un état d'accumulation possédant un premier ensemble de chemins de conduction et un état d'appauvrissement possédant un second ensemble de chemins de conduction ; et

dans un mode de lecture, lesdits éléments de commutation étant agencés pour choisir un chemin de conduction de lecture pour permettre l'émission en sortie d'un signal de sortie, le signal de sortie étant émis en sortie lorsque la borne de jonction tunnel reçoit un signal de borne de jonction tunnel ;

une borne de sortie (45) couplée à au moins l'une des première, deuxième, troisième ou quatrième bornes destinée à fournir le signal de sortie, le signal de sortie indiquant le poids de la synapse.

**7.** Synapse artificielle (44) de la revendication 6, la synapse artificielle comprenant :
l'élément compteur antiferromagnétique (2') comprenant :

un circuit de lecture configuré pour fournir un signal de lecture indiquant une tension à une borne de lecture (46), ledit circuit de lecture comprenant une unité de mesure de tension (26),

ladite unité de mesure de tension étant connectée aux bornes de la borne de sortie (45) et d'une borne de lecture de jonction tunnel (51), la borne de lecture de jonction tunnel étant couplée à la borne de jonction tunnel (39) ; et ladite unité de mesure de tension étant configurée pour mesurer la tension et pour fournir le signal de lecture à la borne de lecture ;

un circuit de couplage comprenant une pluralité de commutateurs de commande (29 ; $29_1$, $29_2$, $29_3$, 294) et une pluralité de commutateurs pondérés (30 ; $30_1$, $30_2$, $30_3$, $30_4$), ladite pluralité de commutateurs de commande pouvant être commandés par un signal de commande de couplage pour coupler et découpler sélectivement la pluralité de commutateurs pondérés à la borne de lecture, et ladite pluralité de commutateurs pondérés étant agencés pour recevoir le signal de lecture au niveau d'une borne (36) de chaque commutateur pondéré, l'impédance de chaque commutateur pondéré étant déterminée par la tension.

**8.** Synapse artificielle (44) de la revendication 6, la synapse artificielle comprenant :

des premier et second éléments de compteur à jonction tunnel (2' ; $2'_1$, $2'_2$) pouvant être commandés par l'ensemble de signaux de commande et couplés conjointement à la borne de sortie (45),

ladite borne de sortie étant couplée conjointement à la deuxième borne (41 ; $41_2$) de chaque élément compteur à jonction tunnel ;

ledit premier élément compteur à jonction tunnel comprenant une première borne de jonction tunnel (39, $39_1$) destinée à recevoir un premier signal de borne de jonction tunnel ; et

ledit second élément compteur à jonction tunnel comprenant une seconde borne de jonction tunnel (39, $39_2$) destinée à recevoir un second signal de borne de jonction tunnel ;

lesdits premier et second signaux de borne de jonction tunnel étant d'amplitude égale et de polarité opposée.

**9.** Synapse artificielle (44) de la revendication 8, la synapse artificielle comprenant :

un circuit de lecture configuré pour fournir un signal de lecture indiquant une tension à une borne de lecture (46), ledit circuit de lecture comprenant une unité de mesure de tension (26),

ladite unité de mesure de tension étant connectée aux bornes de la borne de sortie (45) et d'une borne qui est mise à la terre ; et

ladite unité de mesure de tension étant configurée pour mesurer la tension et pour fournir le signal de lecture à la borne de lecture.

**10.** Synapse artificielle (44) de la revendication 9, la synapse artificielle comprenant :

un circuit de couplage comprenant un commutateur pondéré (50) avec des première, deuxième et troisième bornes (51, 52, 53),

ladite première borne du commutateur pondéré étant couplée à la seconde borne de jonction tunnel (39, $39_2$) ; et ladite troisième borne du commutateur pondéré étant couplée à la borne de lecture (46) et étant configurée pour commander un chemin de conduction entre les première et deuxième bornes du commutateur pondéré.

**11.** Synapse artificielle (44) de la revendication 9, la synapse artificielle comprenant :
un circuit de couplage comprenant au moins un commutateur de commande (3, 29 ; $29_1$, $29_2$, $29_3$, $29_4$) et au moins un commutateur pondéré (4, 30 ; $30_1$, $30_2$, $30_3$, $30_4$), ledit au moins un commutateur de commande pouvant être commandé par un signal de commande de couplage pour coupler et découpler sélectivement le au moins un commutateur pondéré à la borne de lecture (46), et ledit au moins un commutateur pondéré étant agencé pour recevoir le signal de lecture au niveau d'une borne (5, 36) du au moins un commutateur pondéré, l'impédance du au moins un commutateur pondéré étant déterminée par la tension.

12. Synapse artificielle (44) de l'une quelconque des revendications 6 à 11, ledit antiferro-aimant cruciforme (37) étant un antiferro-aimant avec une structure cristalline présentant une symétrie d'inversion localement brisée et où les sous-réseaux antiferromagnétiques forment des partenaires d'inversion.

13. Synapse artificielle (44) de la revendication 12, ledit antiferro-aimant cruciforme (37) comprenant CuMnAs ou $Mn_2Au$.

14. Synapse artificielle (44) de l'une quelconque des revendications 6 à 13, lesdits éléments de commutation (18) étant des transistors à effet de champ.

15. Réseau neuronal artificiel (12) comprenant un réseau de synapses artificielles (1, 44) selon l'une quelconque des revendications 1 à 14.

Synapse 1, 1₁

Feedback pre-synaptic neuron                    Pre-synaptic neuron

Feedback post-synaptic                          Post-synaptic neuron
neuron

Fig. 1

Fig. 2

Fig. 3

Fig. 4a

+1 State

Fig. 4b

-1 State

Fig. 4c

Fig. 5

Fig. 6a

Fig. 6b

Fig. 7

Fig. 8a

Fig. 8b

Fig. 9

Fig. 10

Synapse 1, $1_3$

Feedback post-synaptic neuron

Wire G

Feedforward pre-synaptic neuron

Wire J    Wire K    Wire L

Back-propagated error pre-synaptic neuron

Wire N

Feedback pre-synaptic neuron

Wire H    Wire I

Wire M

Feedforward post-synaptic neuron

Wire O    Wire P

Back-propagated error post-synaptic neuron

Fig. 11

EP 3 798 914 B1

Fig. 12a

Fig. 12b

Fig. 13a

Fig. 13b

Synapse 44, 44₁

Fig. 14

47

Feedback post-synaptic
neuron

48

18, 18₂    18, 18₃    18, 18₃    18, 18₂

39, 39₁    41, 41₂    41, 41₂    39, 39₂
18, 18₁    -Vb    +Vb    18, 18₁
37    37

18, 18₅    18, 18₄    18, 18₄    18, 18₅

49, 49₁    45    49, 49₂

Feedback pre-synaptic
neuron

Feedback pre-synaptic
neuron

Fig. 15

Synapse 44, 44₂

Pre-synaptic neuron

Fig. 16

Synapse 44, $44_3$

Pre-synaptic neuron

$-V_b$     $\bigcirc$ 39, $39_1$     $+V_b$     $\bigcirc$ 39, $39_2$

$R = R - \Delta R$     $R = R + \Delta R$

$2'_1$     $2'_2$

45 $\bigcirc$ $I_{out}$

Post-synaptic neuron

Fig. 17

Synapse 44, 44₄

Fig. 18

Feedback post-
synaptic neuron

Synapse 44, 44₅

47

39, 39₁
-Vb

39, 39₂
+Vb

37

37

45

Feedback pre-synaptic
neuron

Feedback pre-synaptic
neuron

29, 29₁

31

Feedforward pre-synaptic
neuron

Back-propagated error
pre-synaptic neuron

Feedforward post-synaptic neuron

Back-propagated error post-synaptic
neuron

Fig. 19

EP 3 798 914 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8977578 B1
- EP 2744002 A1

### Non-patent literature cited in the description

- **HASSABIS, D. ; KUMARAN, D. ; SUMMERFIELD, C. ; BOTVINICK, M.** Neuroscience-Inspired Artificial Intelligence. *Neuron,* 2017, vol. 95, 245-258
- **SCHUMAN, C. D. et al.** Survey of Neuromorphic Computing and Neural Networks in Hardware. *arXiv:1705.06963,* 2017
- **BOYN, S. et al.** Learning through ferroelectric domain dynamics in solid-state synapses. *Nat. Commun.,* 2017, vol. 8, 14736
- **PREZIOSO, M. et al.** Training and operation of an integrated neuromorphic network based on metal-oxide memristors. *Nature,* 2015, vol. 521, 61-64
- **YANG, J. J. et al.** High switching endurance in TaOx memristive devices. *Appl. Phys. Lett.,* 2010, vol. 97
- **LI, S. et al.** Synaptic plasticity and learning behaviours mimicked through Ag interface movement in an Ag/conducting polymer/Ta memristive system. *J. Mater. Chem. C,* 2013, vol. 1, 5292
- **LEI, Y. et al.** Memristive learning and memory functions in polyvinyl alcohol polymer memristors. *AIP Adv.,* 2014, vol. 4
- **ZHANG, C. et al.** Synaptic plasticity and learning behaviours in flexible artificial synapse based on polymer/viologen system. *J. Mater. Chem. C,* 2016, vol. 4, 3217-3223
- **NAWROCKI, R. A. ; VOYLES, R. M. ; SHAHEEN, S. E.** Neurons in polymer: Hardware neural units based on polymer memristive devices and polymer transistors. *IEEE Trans. Electron Devices,* 2014, vol. 61, 3513-3519
- **IKEDA, S. et al.** Magnetic Tunnel Junctions for Spintronic Memory and Beyond. *IEEE Trans. Elect. Dev.,* 2006, 991-1002
- **KHALILI AMIRI, P. et al.** Low write-energy magnetic tunnel junctions for high-speed spin-transfer-torque MRAM. *IEEE Electron Device Lett.,* 2011, vol. 32, 57-59
- **TORREJON, J. et al.** Neuromorphic computing with nanoscale spintronic oscillators. *Nature,* 2017, vol. 547, 428-431